(19) Europäisches Patentamt
European Patent Office
Office européen des brevets

(11) EP 1 607 415 A1

(12) EUROPEAN PATENT APPLICATION
published in accordance with Art. 158(3) EPC

(43) Date of publication:
**21.12.2005 Bulletin 2005/51**

(21) Application number: **04719661.3**

(22) Date of filing: **11.03.2004**

(51) Int Cl.[7]: **C08F 8/00**, C08F 6/08, C08F 255/00

(86) International application number:
**PCT/JP2004/003222**

(87) International publication number:
**WO 2004/081062 (23.09.2004 Gazette 2004/39)**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **14.03.2003 JP 2003069803**

(71) Applicant: **Tonen Chemical Corporation**
**Minato-Ku, Tokyo 105-8572 (JP)**

(72) Inventors:
- **SUZUKI, Sadakatsu**
  **Kawaguchi-shi, Saitama 332-0015 (JP)**
- **OZAKI, Hiroyuki**
  **Yokohama-shi, Kanagawa 223-0064 (JP)**
- **HORII, Masatoshi**
  **Yokohama-shi, Kanagawa 223-0064 (JP)**
- **UEKI, Satoshi**
  **Ota-ku, Tokyo 143-0023 (JP)**
- **IMANISHI, Kunihiko**
  **Yokohama-shi, Kanagawa 235-0022 (JP)**
- **WAKABAYASHI, Hideaki**
  **Yokohama-shi, Kanagawa 224-0023 (JP)**

(74) Representative: **Müller-Boré & Partner**
**Patentanwälte**
**Grafinger Strasse 2**
**81671 München (DE)**

# (54) METHOD FOR PRODUCING MODIFIED POLYOLEFIN SOLUTION

(57) A method for producing a modified polyolefin solution, which can reduce polymer loss, solvent loss and further number of steps, and thus has excellent productivity and economic efficiency in a series of steps, wherein an α-olefin is polymerized to obtain a polyolefin, followed by modification with a modifying agent to produce a modified polyolefin solution, **characterized by** comprising a step wherein an α-olefin is polymerized in the presence of polymerization catalyst in liquid phase to obtain a polyolefin as a polymer solution or slurry state and a step wherein thus obtained polymer is reacted with a modifying agent to modify a polyolefin, and in that the polymer is not isolated, not recovered, nor substantially dried, in a method for producing a modified polyolefin solution by modification, using a modification agent, of a polyolefin obtained by polymerization of an α-olefin.

EP 1 607 415 A1

## Description

FIELD OF THE INVENTION

The present invention relates to a method for producing a modified polyolefin solution, and in more detail, to a method for producing a modified polyolefin solution that can reduce polymer loss and solvent loss, cut down production steps and improve productivity and economic efficiency in a series of production steps where an α-olefin is polymerized to obtain a polyolefin which is then modified by a modification agent to a modified polyolefin.

DESCRIPTION OF THE PRIOR ART

Generally, polyolefins such as polypropylene and polyethylene are used in various fields because they are superior in mechanical properties, moldability, hygiene, etc. However, due to high crystallinity and nonpolarity thereof, they lack affinity for not only other substrates, for example, polar resins, such as styrene resins, acrylic resins and vinyl acetate resins, but also metal surfaces, glass and inorganic fillers.
For this reason, several methods for painting or gluing polyolefin-based resins have been proposed, such as a method to activate molded product surface by plasma processing or gas processing, a method for using a chlorinated polyolefin as a primer and a method for using a polyolefin or a chlorinated polyolefin as a primer furnished with affinity by modifying with polar compounds such as unsaturated dicarboxylic acids.
However, adherence to a polyolefin or solvent resistance of a chlorinated polyolefin declines generally with increase in chlorination degree. On the other hand, when chlorine content gets lower, solution properties decline and lead to viscosity increase and gelation during storage, and especially when stored at low temperature, the solution will lose fluidity, posing a handling problem. By lowering solution concentration, problems such as lower pigment dispersibility and higher transportation cost will arise, although fluidity at low temperature is improved. Moreover, with recent tendency toward increasing in substrate rigidity, a conventional chlorinated polyolefin cannot provide high adhesive strength, leading to insufficient adherence of primers.
With regard to modifying a polyolefin using a monomer having a functional group, a method has been known where a radical reaction initiator is used for reaction in the presence or absence of a solvent.
In more detail, several methods for modification reaction have been known such as a method for reacting in a solution (see JP-B-44-15422 [Claims]), a method for reacting in slurry (see, for example, JP-B-43-18144 [Claims]) and a method for reacting in melt (see, for example, JP-B-43-27421 [Claims]).
Among these methods, a method for feeding a polyolefin in melt state to an extruder for reaction is widely used in industry because of easy operation. However, reaction in melt state generally gives low modification efficiency, lowers molecular weight of a polyolefin strikingly, and in addition, often causes coloring of thus obtained product. For example, a maleic anhydride-modified polyolefin produced by a graft reaction in melting and kneading state tends to turn brown, tan or yellow.
In addition, when a monomer of low boiling point is used for modification, modification becomes difficult due to intense volatilization of the monomer caused by elevated processing temperature. Moreover, since thus produced modified polyolefin is usually used in a solution, an extra step is required to dissolve the modified polyolefin in a solvent again.
In contrast, modification in the presence of a solvent can significantly reduce problems relating to modification in melting and kneading. Several methods for modifying a polyolefin in the presence of a solvent have been proposed, such as a method for dissolving a polyolefin and a monomer in a solvent and then reacting by adding a catalyst dissolved in a small amount of a solvent (see JP-B-44-15422) and a method for dissolving a polyolefin in a halogenated hydrocarbon-based solvent and then adding a monomer and a radical reaction initiator (see JP-A-48-28092 [Claims]).
A polyolefin is usually produced by polymerizing an olefin monomer in homogeneous liquid phase or heterogeneous solid-liquid phase and then separating and removing catalyst components and the like by depositing thus obtained solid polyolefin.
However, it is not easy to transform an amorphous polyolefin into powder or pellets that are convenient to transport, due to stickiness thereof. An amorphous polyolefin is generally transported in melting state in a large container, transported as a block packaged in a paper box coated with a peeling agent or transported as a small slat coated with a nonadhesive substance, but any of these transportation methods is inferior in operability.

SUMMARY OF THE INVENTION

Considering the above-mentioned situations, an object of the present invention is to provide a method for producing a modified polyolefin solution that can reduce polymer loss and solvent loss, cut down production steps and improve productivity and economic efficiency in a series of the production steps where an α-olefin is polymerized to

obtain a polyolefin which is then modified by a modification agent to a modified polyolefin.

After intensive study on a way to attain the above object, the present inventors have found .that a modified polyolefin solution can be produced by polymerizing an α-olefin in liquid phase in the presence of a solvent and modifying thus obtained polyolefin dissolved in the solvent by adding a modifying agent to the solution without substantial drying of the polyolefin consistently in each unit operation and between unit operations, and thus completed the present invention.

That is, the first aspect of the present invention provides a method for producing a modified polyolefin solution, characterized by comprising a step wherein an α-olefin is polymerized in the presence of polymerization catalyst in liquid phase to obtain a polyolefin as a polymer solution or slurry and a step wherein the polymer in solution or slurry state is modified by a modification agent, and in that the polymer is not dried.

Further, the second aspect of the present invention provides the method for producing a modified polyolefin solution in the first aspect, characterized by further comprising a step for removing catalyst components before or after the step wherein a polyolefin is modified.

Further, the third aspect of the present invention provides the method for producing a modified polyolefin solution in the first or second aspect, characterized by further comprising a step for removing unreacted modifying agents and derivatives of the modifying agent from a solution or slurry of the modified polyolefin after modification step of a polyolefin.

Furthermore, the fourth aspect of the present invention provides the method for producing a modified polyolefin solution in the first to third aspects, characterized by further comprising a step for adjusting concentration of the solution or slurry after any of the steps.

Preferred embodiments of the present invention include:

(1) A method for producing a modified polyolefin solution characterized in that polymerization catalyst is homogeneous metal complex catalyst, in the first invention of the present invention.

(2) A method for producing a modified polyolefin solution characterized in that polymerization catalyst is a vanadium complex and an organoaluminum compound, in the first invention of the present invention.

(3) A method for producing a modified polyolefin solution characterized in that polymerization catalyst is a metallocene compound and an organoaluminum compound, in the first invention of the present invention.

(4) A method for producing a modified polyolefin solution characterized in that a step for polymerizing an α-olefin is a continuous process, a batch process or a combined process thereof, in the first invention of the present invention.

(5) A method for producing a modified polyolefin solution characterized in that a step for polymerizing an α-olefin is carried out using a tubular reactor, a tank type reactor or a combination thereof, in the first invention of the present invention.

(6) A method for producing a modified polyolefin solution characterized in that a step for polymerizing an α-olefin is carried out using a continuous tubular reactor and at least one of raw materials and catalysts (and cocatalysts) is charged portion wise at multiple feed points, in the first invention of the present invention.

(7) A method for producing a modified polyolefin solution characterized by further comprising a step where a polymerization terminator is added to terminate polymerization and unreacted monomers are removed, in the first invention of the present invention.

(8) A method for producing a modified polyolefin solution characterized in that a radical reaction initiator is added together with a chain transfer modulator and/or an antioxidant, if necessary, in a step for modifying a polyolefin, in the first invention of the present invention.

(9) A method for producing a modified polyolefin solution characterized in that a step for modifying a polyolefin is carried out using the same reactor as that used in a step for polymerizing an α-olefin, in the first invention of the present invention.

(10) A method for producing a modified polyolefin solution characterized in that a step for modifying a polyolefin is carried out using the same solvent as that used in a step for polymerizing an α-olefin, in the first invention of the present invention.

(11) A method for producing a modified polyolefin solution characterized in that a modifying agent and/or a radical reaction initiator are added portion wise at least two times, in the first invention of the present invention.

(12) A method for producing a modified polyolefin solution characterized in that a modifying agent is added after dissolved in a solvent or melted by heating in a step for modifying a polyolefin, in the first invention of the present invention.

(13) A method for producing a modified polyolefin solution characterized by comprising a step to insolubilize catalyst components in advance, in a step for removing catalyst components in the second invention of the present invention.

(14) A method for producing a modified polyolefin solution characterized by comprising a step to insolubilize catalyst

components in advance by adding a compound having a hydroxyl group, in a step for removing catalyst components in the second invention of the present invention.

(15) A method for producing a modified polyolefin solution characterized by comprising a step to insolubilize catalyst components in advance by adding a compound having a hydroxyl group or alkali components, in a step for removing catalyst components in the second invention of the present invention.

(16) A method for producing a modified polyolefin solution characterized in that a compound having a hydroxyl group is the same as a polymerization terminator, in the above (14) and (15).

(17) A method for producing a modified polyolefin solution characterized in that a compound having a hydroxyl group is an alcohol in the above (14) to (16).

(18) A method for producing a modified polyolefin solution characterized in that an adsorbent is added in a step for removing catalyst components, in the second invention of the present invention.

(19) A method for producing a modified polyolefin solution characterized in that catalyst components are removed by filtration and/or centrifugal separation in a step for removing catalyst components, in the second invention of the present invention and the above (13) to (18).

(20) A method for producing a modified polyolefin solution characterized in that a filter coagent is used in a step for removing catalyst components, in the second invention of the present invention and the above (19).

(21) A method for producing a modified polyolefin solution characterized in that as a filter coagent, one or two or more members selected from microfiber-like cellulose, asbestos, Celite®, perlite, diatomaceous earth, clay, silica and alumina are used, in the above (20).

(22) A method for producing a modified polyolefin solution characterized in that unreacted modifying agents and/or derivatives thereof are deposited by cooling a reaction solution to room temperature or below and the deposited substance is removed by filtration, centrifugal separation or decantation, in the third invention of the present invention.

(23) A method for producing a modified polyolefin solution characterized in that unreacted modifying agents and/or derivatives thereof are removed by extraction using a solvent having a higher polarity than a reaction solvent, in the third invention of the present invention.

(24) A method for producing a modified polyolefin solution characterized in that viscosity (20°C) of a solution or slurry is kept at 2 to 2,000 cP by adjusting concentration thereof, in the fourth invention of the present invention.

(25) A method for producing a modified polyolefin solution characterized in that weight average molecular weight of a polyolefin is 2,000 to 600,000, in the first invention of the present invention.

(26) A method for producing a modified polyolefin solution characterized in that racemic diad fraction (measured by $^{13}C$-NMR) is 0.12 to 0.88, in the first to fourth inventions of the present invention.

(27) A method for producing a modified polyolefin solution characterized in that racemic diad fraction (measured by $^{13}C$-NMR) is 0.51 to 0.88, in the first to fourth inventions of the present invention.

(28) A method for producing a modified polyolefin solution characterized in that racemic diad fraction (measured by $^{13}C$-NMR) is 0.54 to 0.84, in the first to fourth inventions of the present invention.

(29) A method for producing a modified polyolefin solution characterized in that a polyolefin has 20 J/g or less of heat of crystal fusion and 70% by weight or less of insoluble matter in Soxhlet extraction using boiling n-heptane, in the first to fourth inventions of the present invention.

BRIEF EXPLANATION OF THE DRAWINGS

Figure 1: A schematic drawing showing representative process, where a modified polyolefin solution is produced according to the present invention.

Figure 2: A specific explanatory drawing, where a modified polyolefin solution is produced according to the present invention.

Figure 3: An explanatory drawing, where a modified polyolefin solution obtained according to the present invention is purified.

NOTATION

(i) a polymerization step;
(ii) a modifying step;
(iii) a catalyst removing step;

(a) insolubilization of catalyst;
(b) removal of catalyst;

(iv) a removing step of unreacted modifying agents and derivatives of the modifying agent;
(v) an adjusting step of solution concentration;

A, A1, A2: a reaction tank (a reactor)
B: solid-liquid separation equipment (a separation tank);
E: a condensation tank (a distillation column);
F: a cooling tank;
G: a catalyst components deposition tank
H, H': a deposition tank and an extraction tank of unreacted modifying agents, and the like.

DETAILED DESCRIPTION OF THE INVENTION

Hereinafter, a method for producing a modified polyolefin solution of the present invention will be described in detail from item to item.

1. Outline of Process Step Flow

First of all, a basic flow of a series of steps of the present invention will be outlined using Figure 1.
A method of the present invention includes a step (i) to polymerize an α-olefin in liquid phase in the presence of polymerization catalyst to obtain a solution or slurry of a polyolefin, and a step (ii) to modify the polyolefin, and thus a modified polyolefin solution is produced without drying the polyolefin.
Moreover, a step (iii) to remove catalyst components before or after the step to modify the polyolefin, a step (iv) to remove unreacted modifying agents and derivatives thereof after the step to modify the polyolefin and a step (v) to adjust concentration of the polymer solution or slurry after any one of the steps (i) to (iv) can be optionally added each to this method.
The present invention is characterized in that a polyolefin and/or a modified polyolefin are always kept in a solution or suspended slurry without being separated or recovered as solid (hereinafter, a term "solution" means slurry too), consistently in each unit operation and between unit operations.

2. Details of Processes

In a method of the present invention, a polyolefin (PO1) is produced by reacting a raw material, an α-olefin (a) in the presence of a reaction solvent (b) and polymerization catalyst (c) using a reactor (d) under specific conditions (e) and terminating polymerization by adding a polymerization terminator (f).
The polyolefin solution is then reacted by the addition of a modifying agent (g) and a radical reaction initiator (h) to produce a modified polyolefin (PO2) solution. Catalyst components can also be removed before or after the step to modify the polyolefin.
The modified polyolefin (P02) solution is purified by removing unreacted modification agents, byproducts, a solvent, and the like. Meanwhile, concentration or viscosity of the solution is adjusted appropriately by removing or adding a solvent.
Incidentally, the polyolefin (PO1) and the modified polyolefin (P02) are sometimes referred to merely as polymer hereinafter.

(i) Polymerization Step

(a) α-olefin

A raw material α-olefin includes an olefin of 2 to 8 carbon atoms, for example, ethylene, propylene, 1-butene, 1-hexene, and 4-methyl-1-pentene and propylene is particularly preferable as raw material of a homopolymer.
Two or more members selected from ethylene, propylene, 1-butene, 1-hexene, and 4-methyl-1-pentene are particularly preferable as raw materials of a copolymer.

(b) Reaction Solvent

With regard to a reaction solvent, it is preferable to use a solvent that is inactive to a polymerization reaction

and remains liquid in polymerization. A solvent maintaining liquid state at atmospheric pressure and room temperature is more preferable. Hereinafter, a "solvent" shall indicate a reaction solvent.

Specifically, a solvent includes saturated aliphatic hydrocarbons such as hexane, heptane, octane, and decane; saturated alicyclic hydrocarbons such as alkylated cyclopentanes, cyclohexane, and alkylated cyclohexanes; and aromatic hydrocarbons such as benzene, toluene, xylene, ethylbenzene methylethylbenzene and propylbenzene, or THF and a mixture of two or more members of these compounds.

(c) Polymerization Catalyst

Any catalyst that can polymerize an olefin can be used without especially limited. However, homogeneous metal complex catalyst is preferably used.

Homogeneous metal complex catalyst is one composed of an organometal compound and an organoaluminum compound, or a metal complex composed of an organic compound having a heteroatom such as oxygen and nitrogen, and a transition metal, including, for example;

[1] catalyst composed of a vanadium complex and an organoaluminum compound;
[2] catalyst composed of a compound of a metal selected from a group consisting of titanium, zirconium and hafnium, having one of a cycloalkadienyl group or derivatives thereof and at least one of an alkoxyl group and an alkylamino group, along with aluminoxanes, a boron compound or an organoaluminum compound;
[3] a catalyst composed of a complex of a metal selected from the group consisting of titanium, zirconium and hafnium, having two of a cycloalkadienyl group or derivatives thereof and a halogen or an alkyl group, along with aluminoxanes, a boron compound or an organoaluminum compound;
[4] catalyst composed of a diimine complex of nickel, palladium, and the like, along with aluminoxanes;
[5] catalyst composed of a phenoxyimine complex of titanium, zirconium, hafnium, and the like, along with aluminoxanes;
[6] catalyst composed of a pyrroleimine complex of titanium, and the like, along with aluminoxanes; and
[7] catalyst composed of at least one complex selected from a group consisting of an alkoxy complex, an alkylamide complex and an acetylacetone complex of Ti, Zr and Hf, along with aluminoxanes, a boron compound or an organoaluminum compound.

A vanadium complex in the above catalyst [1] composed of a vanadium complex and an organoaluminum compound, includes, for example, one described in Makromol. Chem. 180, 57-64 (1979), and specifically, $VOCl_3$, $VCl_4$, V(acetylacetonato)$_3$, V(2-methyl-1,3-butanedionato)$_3$, V(1,3-butanedionato)$_3$, VO(acetylacetonato)$_2$, $VOCl_2$(acetylacetonato), VOCl(acetylacetonato)$_2$, $VO(OR)_3$, etc. are included. It also includes a vanadium compound having a ligand such as an alkylimide and an arylimide, represented by the general formulae (1) and (2).

An organoaluminum compound includes, for example, alkylaluminium halides such as dimethylaluminium chloride, diethylaluminium chloride, diethylaluminium bromide, diethylaluminium iodide, diisobutylaluminium chloride, ethylaluminium sesquichloride, ethylaluminium dichloride, and isobutylaluminium dichloride; and aluminoxanes such as methylaluminoxane.

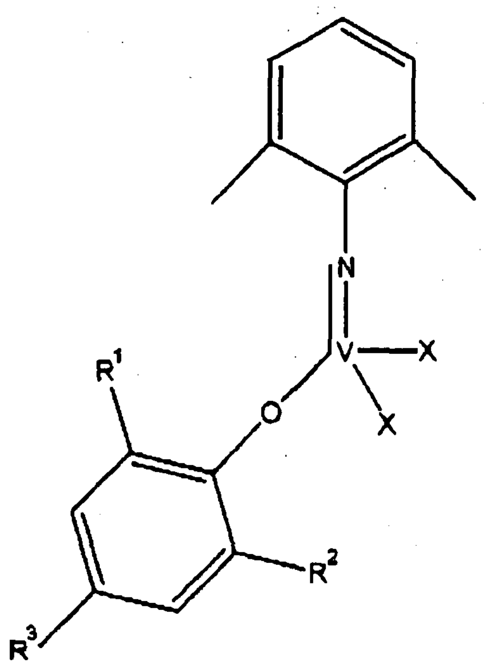

(1)

In the formula (1), X represents F, Cl, Br, I or a $C_{1-3}$ alkyl group; and each of $R_1$ to $R_3$ represents a $C_{1-4}$ alkyl group.

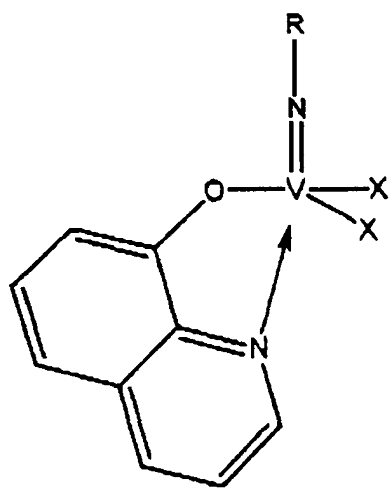

(2)

In the formula (2), X represents F, Cl, Br, I or a $C_{1-3}$ alkyl group; and R represents a $C_{1-4}$ alkyl group.
Use amount of the above components per 1 mol of an olefin are $1 \times 10^{-5}$ to 0.1 mol, preferably $1 \times 10^{-4}$ to $5 \times 10^{-2}$ mol for a vanadium complex and $1 \times 10^{-4}$ to 0.1 mol, preferably $5 \times 10^{-3}$ to 0.05 mol for an organoaluminum compound.
Catalyst [1] can also be added with an electron donor as needed. Electron donors include oxygen atom containing electron donors such as alcohols, phenols, ketones, aldehydes, carboxylic acids, malonic acid, esters of organic acids or inorganic acids, monoethers, diethers, and polyethers; and nitrogen atom containing electron donors such as ammonia, amines, nitriles, and isocyanates. Use amount of an electron donor is 0.01 to 20 mol per 1 mol of a vanadium complex.
Polymerization reaction is carried out at -100 to 90°C for 0.5 to 100 hours, preferably at -50 to 50°C for 1 to 50 hours.
Molecular weight, molecular weight distribution and yield of thus obtained polyolefin can be adjusted by controlling reaction temperature and reaction time. Reaction temperature not higher than -30°C gives polypropylene having

a molecular weight distribution close to monodispersion.

A compound of a metal selected from a group consisting of titanium, zirconium and hafnium, having one of a cycloalkadienyl group and derivatives thereof and at least one of an alkoxyl group and an alkylamino group in the above catalyst [2] includes a compound represented by the general formulae (3) to (5).

For example, a compound represented by the general formula (3) includes $CpTi(OMe)_3$, $CpTi(OEt)_3$, $CpTi(O{\cdot}iPr)_3$, $CpTi(O{\cdot}tBu)_3$, $CpTi(OC_6H_5)_3$, $CpTi(2\text{-}Me\text{-}OC_6H_4)_3$, $CpTi(2\text{-}Et\text{-}OC_6H_4)_3$, $CpTi(2\text{-}Pr\text{-}OC_6H_4)_3$, $CpTi(2\text{-}tBu\text{-}OC_6H_4)_3$, $CpTi(2,6\text{-}(MeO)_2C_6H_3)_3$, $CpTi(2,6\text{-}(EtO)_2C_6H_3)_3$, $CpTi(2,6\text{-}(iPr\text{-}O)_2C_6H_3)_3$, $CpTi(2,6\text{-}(t\text{-}Bu\text{-}O)_2C_6H_3)_3$, $CpTi(2\text{-}Me\text{-}6\text{-}tBu\text{-}OC_6H_3)_3$, $CpTi(3\text{-}Me\text{-}6\text{-}tBu\text{-}OC_6H_3)_3$ $CpTi(OMe)Cl_2$, $CpTi(OMe)_2Cl$, $CpTi(OC_6H_5)Cl_2$, $CpTi(OC_6H_5)_2Cl$, $CpTi(OMe)(OC_6H_5)Cl$, etc.

A compound represented by the general formula (4) includes $(Me_2C)Cp(C_6H_4)OTiCl_2$, $((C_6H_5)_2C)Cp(C_6H_4)OTiCl_2$, $(Me_2C)Cp(3\text{-}Me\text{-}C_6H_3)OTiCl_2$, $(Me_2C)Cp(5\text{-}Me\text{-}C_6H_3)OTiCl_2$, $(Me_2C)Cp(3\text{-}tBu\text{-}C_6H_3)OTiCl_2$, $(Me_2C)Cp(3,5\text{-}Me_2\text{-}C_6H_2)OTiCl_2$, $(Me_2C)Cp(3,5\text{-}tBu_2\text{-}C_6H_2)OTiCl_2$, $(Me_2C)Cp(3\text{-}Me\text{-}5\text{-}tBu\text{-}C_6H_2)OTiCl_2$, $(Me_2C)Cp(3\text{-}tBu\text{-}5\text{-}Me\text{-}C_6H_2)OTiCl_2$, etc.

A compound represented by the general formula (5) includes $MeNSiMe_2(Flu)TiCl_2$, $tBuNSiMe_2(Flu)TiCl_2$, $C_6H_5NSiMe2(Flu)TiCl_2$, $tBuNSi(C_6H_5)_2(Flu)TiCl_2$, $tBuNSiMe_2(Flu)TiMe_2$, etc.
In specific examples of the above general formulae (3) to (5), a compound where Ti is replaced with Zr or Hf can also be included as a specific example.

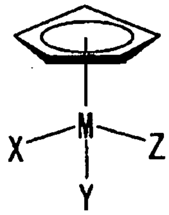

(3)

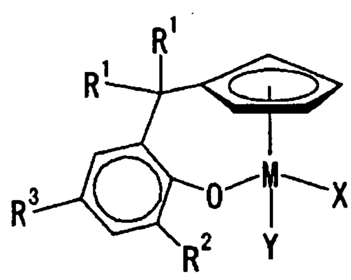

(4)

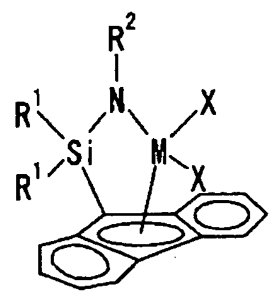

(5)

In formulae (3) to (5), M represents any of titan, zirconium, hafnium atoms; X,Y,Z represent any of a halogen atom such as fluorine, chlorine, bromine and iodine, a $C_{1\text{-}8}$ aliphatic hydrocarbon group and their alkoxyl groups and a $C_{6\text{-}14}$ aromatic hydrocarbon group which may have a substituent and their alkoxyl group; and $R^1$-$R^3$ represent a $C_{1\text{-}8}$ aliphatic hydrocarbon group and a $C_{6\text{-}14}$ aromatic hydrocarbon group which may have a substituent; each of $R^1$ to $R^3$ and X, Y and Z may be the same at the same time or different.

Aluminoxanes include, for example, methyl aluminoxane, ethyl aluminoxane, isobutyl aluminoxane and purified dry aluminoxanes obtained by removing unreacted aluminum compounds from the above aluminoxanes. Instead of aluminoxanes, a boron compound such as triphenylborane, trispentafluorophenylborane, and triphenylmethyltrispentafluoroborate; and further an organoaluminium compound such as dimethylaluminium chloride, diethylaluminium chloride, diethylaluminium bromide, diisobutylaluminium chloride, and dioctylaluminium chloride can also be used.

Use amount of a compound of a metal selected from a group consisting of titanium, zirconium and hafnium, having one of a cycloalkadienyl group or derivatives thereof and at least one of an alkoxyl group and an alkylamino group is $1 \times 10^{-8}$ to 0.1 mol, preferably $1 \times 10^{-7}$ to $5 \times 10^{-2}$ mol per 1 mol of a monomer used, while that of aluminoxanes, a boron compound or an organoaluminum compound, it is $1 \times 10^{-8}$ to 0.1 mol, preferably $1 \times 10^{-7}$ to 0.05 mol per 1 mol of a monomer used.

Polymerization reaction is carried out at -50 to 200°C for 0.5 to 100 hours, preferably at 0 to 150°C for 1 to 50 hours.

In the above catalyst [3] composed of a complex of a metal selected from a group consisting of titanium, zirconium and hafnium having two of a cycloalkadienyl group or derivatives thereof and a halogen or an alkyl group, along with aluminoxanes, a boron compound or an organoaluminum compound, two of a cycloalkadienyl group or derivatives thereof of the above complex may be crosslinked or may not be crosslinked.

A noncrosslinkable metallocene compound includes, for example, a compound represented by the general formulae (6) to (8).

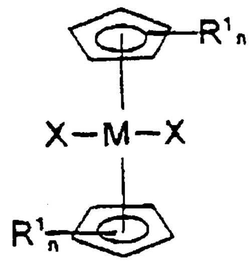

··· (6)

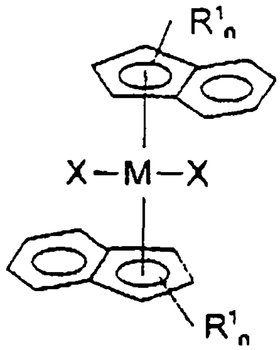

··· (7)

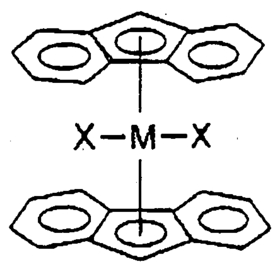

··· (8)

In formulae (6) to (8), $R^1$ represents a hydrogen atom, a $C_{1-8}$ aliphatic, aromatic, alicyclic hydrocarbon group or $SiR_3$ group (R represents a $C_{1-5}$ alkyl group, an aromatic group, or an alicyclic group and R be the same at the same time or different); X represents a halogen atom, a $C_{1-8}$ aliphatic hydrocarbon group, a $C_{6-10}$ aromatic hydrocarbon group; M represents any metal of Ti, Zr, Hf; and n is an integer of 1 to 3.

A phenyl group of an indenyl group and a fluorenyl group in the general formulae (7) and (8) may have a substituent, but a compound having a ligand, such as monocrosslinkable cyclopentadienyl and fluorenyl or derivatives thereof, and monocrosslinkable bisindenyl or derivatives thereof, which was developed for use to produce highly crystalline polypropylene, is not preferable because it can not be expected to provide sufficient effect in the present invention.

A noncrosslinkable metallocene compound represented by the general formulae (6) to (8) is a substituted compound, wherein each cyclopentadienyl group has 1 to 4 substituents, preferably 1 to 3 substituents. Use of a compound having no substituent or 5 substituents is not preferable because of providing only atactic polypropylene.

A mono-substituted compound wherein each cyclopentadienyl group has 1 substituent includes specifically (methylcyclopentadienyl)$_2$ZrCl$_2$, (methylcyclopentadienyl)$_2$ZrBr$_2$, (ethylcyclopentadienyl)$_2$ZrCl$_2$, (ethylcyclopentadienyl)$_2$Zr(methyl)$_2$, (isopropylcyclopentadienyl)$_2$ZrCl$_2$, (isopropylcyclopentadienyl)$_2$ZrI$_2$, (n-propylcyclopentadienyl)$_2$ZrCl$_2$, (n-propylcyclopentadienyl)$_2$Zr(phenyl)$_2$, (n-butylcyclopentadienyl)$_2$ZrCl$_2$, (i-butylcyclopentadienyl)$_2$Zr(benzyl)$_2$, (i-butylcyclopentadienyl)$_2$Zr(methyl)$_2$, (s-butylcyclopentadienyl)$_2$Zr(benzyl)$_2$, (t-butylcyclopentadienyl)$_2$ZrCl$_2$, (t-butylcyclopentadienyl)$_2$ZrBr$_2$, (neopentylcyclopentadienyl)$_2$ZrCl$_2$, (neopentylcyclopentadienyl)$_2$Zr(methyl)$_2$, (cyclopentylcyclopentadienyl)$_2$ZrCl$_2$, (n-hexylcyclopentadienyl)$_2$ZrCl$_2$, (n-hexylcyclopentadienyl)$_2$Zr(phenyl)$_2$, (cyclohexylcyclopentadienyl)$_2$ZrCl$_2$, (cyclohexylcyclopentadienyl)$_2$Zr(methyl)$_2$, (phenylcyclopentadienyl)$_2$ZrCl$_2$, (trimethylsilylcyclopentadienyl)$_2$ZrCl$_2$, (triphenylsilylcyclopentadienyl)$_2$ZrCl$_2$, (diphenylmethylsilylcyclopentadi-

enyl)$_2$ZrCl$_2$, (methylcyclopentadienyl)$_2$HfCl$_2$, (methylcyclopentadienyl)$_2$HfBr$_2$, (ethylcyclopentadienyl)$_2$HfCl$_2$, (ethylcyclopentadienyl)$_2$Hf(methyl)$_2$, (isopropylcyclopentadienyl)$_2$HfCl$_2$, (isopropylcyclopentadienyl)$_2$HfI$_2$, (n-propylcyclopentadienyl)$_2$HfCl$_2$, (n-propylcyclopentadienyl)$_2$Hf(phenyl)$_2$, (n-butylcyclopentadienyl)$_2$HfCl$_2$, (i-butylcyclopentadienyl)$_2$Hf(benzyl)$_2$, (i-butylcyclopentadienyl)$_2$Hf(methyl)$_2$, (s-butylcyclopentadienyl)$_2$Hf(benzyl)$_2$, (t-butylcyclopentadienyl)$_2$HfCl$_2$, (t-butylcyclopentadienyl)$_2$HfBr$_2$, (neopentylcyclopentadienyl)$_2$HfCl$_2$, (neopentylcyclopentadienyl)$_2$Hf(methyl)$_2$, (cyclopentylcyclopentadienyl)$_2$HfCl$_2$, (n-hexylcyclopentadienyl)$_2$HfCl$_2$, (n-hexylcyclopentadienyl)$_2$Hf(phenyl)$_2$, (cyclohexylcyclopentadienyl)$_2$HfCl$_2$, (cyclohexylcyclopentadienyl)$_2$Hf(methyl)$_2$, (phenylcyclopentadienyl)$_2$HfCl$_2$, (trimethylsilylcyclopentadienyl)$_2$HfCl$_2$, (triphenylsilylcyclopentadienyl)$_2$HfCl$_2$, (diphenylmethylsilylcyclopentadienyl)$_2$HfCl$_2$, (methylcyclopentadienyl)$_2$TiCl$_2$, (methylcyclopentadienyl)$_2$TiBr$_2$, (ethylcyclopentadienyl)$_2$TiCl$_2$, (ethylcyclopentadienyl)$_2$Ti(methyl)$_2$, (isopropylcyclopentadienyl)$_2$TiCl$_2$, (isopropylcyclopentadienyl)$_2$TiI$_2$, (n-propylcyclopentadienyl)$_2$TiCl$_2$, (n-propylcyclopentadienyl)$_2$Ti(phenyl)$_2$, (n-butylcyclopentadienyl)$_2$TiCl$_2$, (i-butylcyclopentadienyl)$_2$Ti(benzyl)$_2$, (i-butylcyclopentadienyl)$_2$Ti(methyl)$_2$, (s-butylcyclopentadienyl)$_2$Ti(benzyl)$_2$, (t-butylcyclopentadienyl)$_2$TiCl$_2$, (t-butylcyclopentadienyl)$_2$TiBr$_2$, (neopentylcyclopentadienyl)$_2$TiCl$_2$, (neopentylcyclopentadienyl)$_2$Ti(methyl)$_2$, (cyclopentylcyclopentadienyl)$_2$TiCl$_2$, (n-hexylcyclopentadienyl)$_2$TiCl$_2$, (n-hexylcyclopentadienyl)$_2$Ti(phenyl)$_2$, (cyclohexylcyclopentadienyl)$_2$TiCl$_2$, (cyclohexylcyclopentadienyl)$_2$Ti(methyl)$_2$, (phenylcyclopentadienyl)$_2$TiCl$_2$, (trimethylsilylcyclopentadienyl)$_2$TiCl$_2$, (triphenylsilylcyclopentadienyl)$_2$TiCl$_2$, (diphenylmethylsilylcyclopentadienyl)$_2$TiCl$_2$, etc.

A di-substituted compound wherein each cyclopentadienyl group has 2 substituents includes specifically (dimethylcyclopentadienyl)$_2$ZrCl$_2$, (dimethylcyclopentadienyl)$_2$ZrBr$_2$, (methylethylcyclopentadienyl)$_2$ZrI$_2$, (methylpropylcyclopentadienyl)$_2$Zr(methyl)$_2$, (dipropylcyclopentadienyl)$_2$Zr(phenyl)$_2$, (diphenylcyclopentadienyl)$_2$Zr(benzyl)$_2$, (indenyl)$_2$ZrCl$_2$, (dimethylcyclopentadienyl)$_2$HfCl$_2$, (dimethylcyclopentadienyl)$_2$HfBr$_2$, (methylethylcyclopentadienyl)$_2$HfI$_2$, (methylpropylcyclopentadienyl)$_2$Hf(methyl)$_2$, (dipropylcyclopentadienyl)$_2$Hf(phenyl)$_2$, (diphenylcyclopentadienyl)$_2$Hf(benzyl)$_2$, (indenyl)$_2$HfCl$_2$, (dimethylcyclopentadienyl)$_2$TiCl$_2$, (dimethylcyclopentadienyl)$_2$TiBr$_2$, (methylethylcyclopentadienyl)$_2$TiI$_2$, (methylpropylcyclopentadienyl)$_2$Ti(methyl)$_2$, (dipropylcyclopentadienyl)$_2$Ti(phenyl)$_2$, (diphenylcyclopentadienyl)$_2$Ti(benzyl)$_2$, (indenyl)$_2$TiCl$_2$, etc.

A tri- or tetra-substituted compound wherein each cyclopentadienyl group has 3 or 4 substituents includes specifically (trimethylcyclopentadienyl)$_2$ZrCl$_2$, (indenylmethyl)$_2$ZrCl$_2$, (tetramethylcyclopentadienyl)$_2$ZrCl$_2$, (fluorenyl)$_2$ZrCl$_2$, (trimethylcyclopentadienyl)$_2$HfCl$_2$, (indenylmethyl)$_2$HfCl$_2$, (tetramethylcyclopentadienyl)$_2$HfCl$_2$, (fluorenyl)$_2$HfCl$_2$, (trimethylcyclopentadienyl)$_2$TiCl$_2$, (indenylmethyl)$_2$TiCl$_2$, (tetramethylcyclopentadienyl)$_2$TiCl$_2$, (fluorenyl)$_2$TiCl$_2$, etc.

A monocrosslinkable metallocene compound includes, for example, a compound represented by the general formula (9).

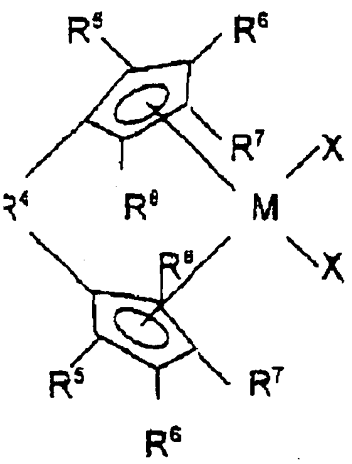

··· (9)

In the general formula (9), $R^4$ is a divalent aromatic, alicyclic or aliphatic hydrocarbon group and/or a divalent group having a heteroatom such as oxygen, nitrogen and silicon other than C and H, such as a divalent oxygen-containing group, a divalent nitrogen-containing group and a divalent silicon-containing group; each of $R^5$ to $R^8$ is a hydrogen atom or an aliphatic hydrocarbon group of 1 to 8 carbon atoms, and may be the same or different. At least one of $R^5$ to $R^8$ of both cyclopentadiene rings is a hydrogen atom; X is a halogen, an aliphatic hydrocarbon group of 1 to 8 carbon atoms and an aromatic hydrocarbon group of 6 to 10 carbon atoms; and M is any metal of Ti, Zr and Hf.

A monocrosslinkable metallocene compound includes specifically, for example, $CH_2CH_2$(methylcyclopentadienyl)$_2$ZrBr$_2$, $(CH_3)_2$Si(cyclopentadienyl)(dimethylcyclopentadienyl)$_2$ZrBr$_2$, $(C_6H_5)$C(ethylcyclopentadienyl)$_2$ZrCl$_2$, $CH_2CH_2CH_2$(ethylcyclopentadienyl)(trimethylcyclopentadienyl)Zr( methyl)$_2$, $CH_2CH_2$(i-propylcyclopentadienyl)$_2$ZrCl$_2$,

$(CH_3)_2$Si(i-propylcyclopentadienyl)$_2$ZrI$_2$, $(CH_3)_2$Si(n-propylcyclopentadienyl)(tetramethylcyclopentadienyl)$_2$ ZrCl$_2$, $(CH_3)_2$Si(n-propylcyclopentadienyl)$_2$Zr(phenyl)$_2$, $(C_6H_5)_2$Si(n-butylcyclopentadienyl)$_2$ZrCl$_2$, $(CH_3)_2$Si(i-butylcyclopentadienyl)$_2$Zr(benzyl)$_2$, $CH_2CH_2$(methylcyclopentadienyl)(i-butylcyclopentadienyl)Zr(meth yl)$_2$, $(CH_3)_2$Si(s-butylcyclopentadienyl)$_2$Zr(benzyl)$_2$, $(CH_3)_2$Si(t-butylcyclopentadienyl)$_2$ZrCl$_2$, $(CH_3)_2$Si(t-butylcyclopentadienyl)$_2$ZrBr$_2$, $(CH_3)_2$ Si(neopentylcyclopentadienyl)$_2$ZrCl$_2$, $(CH_3)_2$Si(neopentylcyclopentadienyl)(dimethylcyclopentadienyl)Zr( methyl)$_2$, $(CH_3)_2$Si(cyclopentylcyclopentadienyl)$_2$ZrCl$_2$, $(CH_3)_2$Si(cyclopentylcyclopentadienyl)$_2$ZrI$_2$, $(CH_3)_2$Si(n-hexylcyclopentadienyl)$_2$ZrCl$_2$, $(CH_3)_2$Si(n-hexylcyclopentadienyl)$_2$Zr(phenyl)$_2$, $(CH_3)_2$Si(cyclohexylcyclopentadienyl)$_2$ZrCl$_2$, $(CH_3)_2$ Si(cyclohexylcyclopentadienyl)$_2$Zr(methyl)$_2$, $(CH_3)_2$Si(phenylcyclopentadienyl)$_2$ZrCl$_2$, $(CH_3)_2$Si(dimethylcyclopentadienyl)$_2$ZrCl$_2$, $(CH_3)_2$Si(dimethylcyclopentadienyl)$_2$ZrBr$_2$, $(CH_3)_2$Si(dimethylcyclopentadienyl)(diethylcyclopentadienyl)$_2$ ZrI$_2$, $(CH_3)_2$Si(methylpropylcyclopentadienyl)$_2$Zr(methyl)$_2$, $(CH_3)_2$Si(dipropylcyclopentadienyl)$_2$Zr(phenyl)$_2$, $(CH_3)_2$Si (diphenylcyclopentadienyl)$_2$Zr(benzyl)$_2$, $CH_2CH_2CH_2$(indenyl)$_2$ZrCl$_2$, $(CH_3)_2$Si(trimethylcyclopentadienyl)$_2$ZrCl$_2$, $CH_2CH_2CH_2$(indenylmethyl)$_2$ZrCl$_2$, $(CH_3)_4Si_2$(cyclopentadienyl)(tetramethylcyclopentadienyl)ZrCl$_2$, $CH_2CH_2CH_2$ (methylcyclopentadienyl)(fluorenyl)ZrCl$_2$, $CH_2CH_2$(methylcyclopentadienyl)$_2$HfBr$_2$, $(CH_3)_2$Si(cyclopentadienyl)(dimethylcyclopentadienyl)$_2$HfBr$_2$, $(C_6H_5)$C(ethylcyclopentadienyl)$_2$HfCl$_2$, $CH_2CH_2CH_2$(ethylcyclopentadienyl)(trimethylcyclopentadienyl)Hf( methyl)$_2$, $CH_2CH_2$(i-propylcyclopentadienyl)$_2$HfCl$_2$, $(CH_3)_2$Si(i-propylcyclopentadienyl)$_2$HfI$_2$, $(CH_3)_2$Si(n-propylcyclopentadienyl)(tetramethylcyclopentadienyl) HfCl$_2$, $(CH_3)_2$Si(n-propylcyclopentadienyl)$_2$Hf(phenyl)$_2$, $(C_6H_5)_2$Si(n-butylcyclopentadienyl)$_2$HfCl$_2$, $(CH_3)_2$Si(i-butylcyclopentadienyl)$_2$Hf(benzyl)$_2$, $CH_2CH_2$(methylcyclopentadienyl)(i-butylcyclopentadienyl)Hf(meth yl)$_2$, $(CH_3)_2$Si(s-butylcyclopentadienyl)$_2$Hf(benzyl)$_2$, $(CH_3)_2$Si(t-butylcyclopentadienyl)$_2$HfCl$_2$, $(CH_3)_2$Si(t-butylcyclopentadienyl)$_2$HfBr$_2$, $(CH_3)_2$Si(neopentylcyclopentadienyl)$_2$HfCl$_2$, $(CH_3)_2$Si(neopentylcyclopentadienyl)(dimethylcyclopentadienyl)Hf( methyl)$_2$, $(CH_3)_2$Si(cyclopentylcyclopentadienyl)$_2$HfCl$_2$, $(CH_3)_2$Si(cyclopentylcyclopentadienyl)$_2$HfI$_2$, $(CH_3)_2$Si(n-hexylcyclopentadienyl)$_2$HfCl$_2$, $(CH_3)_2$Si(n-hexylcyclopentadienyl)$_2$Hf(phenyl)$_2$, $(CH_3)_2$Si(cyclohexylcyclopentadienyl)$_2$HfCl$_2$, $(CH_3)_2$Si(cyclohexylcyclopentadienyl)$_2$Hf(methyl)$_2$, $(CH_3)_2$Si(phenylcyclopentadienyl)$_2$HfCl$_2$, $(CH_3)_2$Si(dimethylcyclopentadienyl)$_2$HfCl$_2$, $(CH_3)_2$Si (dimethylcyclopentadienyl)$_2$HfBr$_2$, $(CH_3)_2$Si(dimethylcyclopentadienyl)(diethycyclopentadienyl)$_2$HfI$_2$, $(CH_3)_2$Si(methylpropylcyclopentadienyl)$_2$Hf(methyl)$_2$, $(CH_3)_2$Si(dipropylcyclopentadienyl)$_2$Hf(phenyl)$_2$, $(CH_3)_2$Si(diphenylcyclopentadienyl)$_2$Hf(benzyl)$_2$, $CH_2CH_2CH_2$(indenyl)$_2$HfCl$_2$, $(CH_3)_2$Si(trimethylcyclopentadienyl)$_2$HfCl$_2$, $CH_2CH_2CH_2$(indenylmethyl)$_2$HfCl$_2$, $(CH_3)_4Si_2$(cyclopentadienyl)(tetramethylcyclopentadienyl)HfCl$_2$, $CH_2CH_2CH_2$(methylcyclopentadienyl) (fluorenyl)HfCl$_2$, $CH_2CH_2$(methylcyclopentadienyl)$_2$TiBr$_2$, $(CH_3)_2$Si(cyclopentadienyl)(dimethylcyclopentadienyl)$_2$TiBr$_2$, $(C_6H_5)$C(ethylcyclopentadienyl)$_2$TiCl$_2$, $CH_2CH_2CH_2$(ethylcyclopentadienyl)(trimethylcyclopentadienyl)Ti( methyl)$_2$, $CH_2CH_2$(i-propylcyclopentadienyl)$_2$TiCl$_2$, $(CH_3)_2$Si(i-propylcyclopentadienyl)$_2$TiI$_2$, $(CH_3)_2$Si(n-propylcyclopentadienyl)(tetramethylcyclopentadienyl)$_2$ TiCl$_2$, $(CH_3)_2$Si(n-propylcyclopentadienyl)$_2$Ti(phenyl)$_2$, $(C_6H_5)_2$Si(n-butycyclopentadienyl)$_2$TiCl$_2$, $(CH_3)_2$Si(i-butylcyclopentadienyl)$_2$Ti(benzyl)$_2$, $CH_2CH_2$(methylcyclopentadienyl)(i-butylcyclopentadienyl)Ti(meth yl)$_2$, $(CH_3)_2$Si(s-butylcyclopentadienyl)$_2$Ti(benzyl)$_2$, $(CH_3)_2$Si(t-butylcyclopentadienyl)$_2$TiCl$_2$, $(CH_3)_2$Si(t-butylcyclopentadienyl)$_2$TiBr$_2$, $(CH_3)_2$Si(neopentylcyclopentadienyl)$_2$TiCl$_2$, $(CH_3)_2$Si(neopentylcyclopentadienyl)(dimethylcyclopentadienyl)Ti( methyl)$_2$, $(CH_3)_2$Si(cyclopentylcyclopentadienyl)$_2$TiCl$_2$, $(CH_3)_2$Si(cyclopentylcyclopentadienyl)$_2$TiI$_2$, $(CH_3)_2$Si(n-hexylcyclopentadienyl)$_2$TiCl$_2$, $(CH_3)_2$Si(n-hexylcyclopentadienyl)$_2$Ti(phenyl)$_2$, $(CH_3)_2$ Si(cyclohexylcyclopentadienyl)$_2$TiCl$_2$, $(CH_3)_2$Si(cyclohexylcyclopentadienyl)$_2$Ti(methyl)$_2$, $(CH_3)_2$Si(phenylcyclopentadienyl)$_2$TiCl$_2$, $(CH_3)_2$Si(dimethylcyclopentadienyl)$_2$TiCl$_2$, $(CH_3)_2$Si(dimethylcyclopentadienyl)$_2$TiBr$_2$, $(CH_3)_2$Si(dimethylcyclopentadienyl)(diethylcyclopentadienyl)$_2$TiI$_2$, $(CH_3)_2$Si(methylpropylcyclopentadienyl)$_2$Ti(methyl)$_2$, $(CH_3)_2$Si (dipropylcyclopentadienyl)$_2$Ti(phenyl)$_2$, $(CH_3)_2$Si(diphenylcyclopentadienyl)$_2$Ti(benzyl)$_2$, $CH_2CH_2CH_2$(indenyl)$_2$TiCl$_2$, $(CH_3)_2$Si(trimethylcyclopentadienyl)$_2$TiCl$_2$, $CH_2CH_2CH_2$(indenylmethyl)$_2$TiCl$_2$, $(CH_3)_4Si_2$(cyclopentadienyl)(tetramethylcyclopentadienyl)TiCl$_2$, $CH_2CH_2CH_2$(methylcyclopentadinyl)(fluorenyl)TiCl$_2$, etc.

A dicrosslinkable metallocene compound includes, for example, a compound represented by the general formula (10).

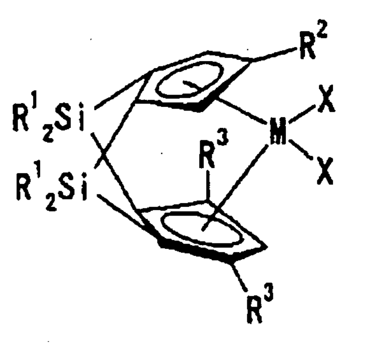

··· (10)

In formula (10), each of $R^1$ to $R^3$ represents a hydrogen atom or any of a $C_{1-8}$ aliphatic hydrocarbon group;

X represents a halogen or an aliphatic hydrocarbon group of 1 to 8 carbon atoms or any of a $C_{6-10}$ aromatic hydrocarbon group; and M represents any of Ti, Zr, Hf metal; and $R^1$ to $R^3$ may be the same at the same time or different.

A specific example of a dicrosslinkable metallocene compound includes a compound described in J. Am. Chem. Soc., Vol. 121, No. 3, 565 (1999).

A dicrosslinkable metallocene compound includes specifically $(1,2\text{-}Me_2Si)_2\eta^5\text{-}C_5H_3)_2ZrCl_2$, $(1,2\text{-}Me_2Si)_2(\eta^5\text{-}C_5H_3)(\eta^6\text{-}C_5H_2\text{-}3\text{-}CH_3)ZrCl_2$, $(1,2\text{-}Me_2Si)_2(\eta^5\text{-}C_5H_3)\{\eta^6\text{-}C_5H_2\text{-}3\text{-}CH(CH_3)_2\}ZrCl_2$, $(1,2\text{-}Me_2Si)_2(\eta^5\text{-}C_5H_3)\{\eta^5\text{-}C_5H\text{-}3,5\text{-}(CH(CH_3)_2)_2\}ZrCl_2$, $(1,2\text{-}Me_2Si)_2\{\eta^5\text{-}C_5H_2\text{-}4\text{-}CH_3\}\{\eta^5\text{-}C_5H\text{-}3,5\text{-}(CH(CH_3)_2)_2\}ZrCl_2$, $(1,2\text{-}Me_2Si)_2\{\eta^5\text{-}C_6H_5\text{-}4\text{-}CH(CH_3)_2\}\{\eta^5\text{-}C_5H\text{-}3,5\text{-}(CH(CH_3)_2)_2\}ZrCl_2$, $(1,2\text{-}Me_2Si)_2\{\eta^5\text{-}C_5H_2\text{-}4\text{-}Si(CH_3)_2\}\{\eta^5\text{-}C_5H\text{-}3,5\text{-}(CH(CH_3)_2)_2\}ZrCl_2$, $(1,2\text{-}(C_6H_5)_2Si)_2\{\eta^5\text{-}C_5H_2\text{-}4\text{-}Si(CH_3)_3\}\{\eta^5\text{-}C_5H\text{-}3,5\text{-}(CH(CH_3)_2)_2\}ZrCl_2$, $(1,2\text{-}Me_2Si)_2\{\eta^5\text{-}C_5H_2\text{-}4\text{-}Si(CH_3)_3\}\{\eta^5\text{-}C_5H\text{-}3,5\text{-}(CH(CH_3)_2\}Zr(CH_3)_2$, $(1,2\text{-}Me_2Si)_2(\eta^5\text{-}C_5H_3)_2HfCl_2$, $(1,2\text{-}Me_2Si)_2(\eta^5\text{-}C_5H_3)(\eta^5\text{-}C_5H_2\text{-}3\text{-}CH_3)HfCl_2$, $(1,2\text{-}Me_2Si)_2(\eta^5\text{-}C_5H_3)_2TiCl_2$, $(1,2\text{-}Me_2Si)_2(\eta^5\text{-}C_5H_3)(\eta^5\text{-}C_5H_2\text{-}3\text{-}CH_3)TiCl_2$, etc.

Aluminoxanes, a boron compound or an organoaluminum compound described in [1] and [2] can be used.

Use amounts of the above components per 1 mol of a monomer, is $5.0 \times 10^{-7}$ to $5.0 \times 10^{-3}$ mol, preferably $1.0 \times 10^{-6}$ to $1.0 \times 10^{-4}$ mol for a metallocene compound, while for aluminoxanes, a boron compound or an organoaluminum compound, it is $1.0 \times 10^{-5}$ to 5.0 mol, preferably $1.0 \times 10^{-3}$ to 0.1 mol.

Polymerization reaction is carried out at -100 to 150°C for 0.1 to 100 hours, preferably at -70 to 100°C for 1 to 50 hours.

A diimine complex of nickel, palladium, and the like in the above catalyst [4] composed of a diimine complex of nickel, palladium,'and the like, and aluminoxanes includes, for example, a compound represented by the general formulae (11) to (14).

Aluminoxanes include, for example, methylaluminoxane, ethylaluminoxane, butylaluminoxane, etc.

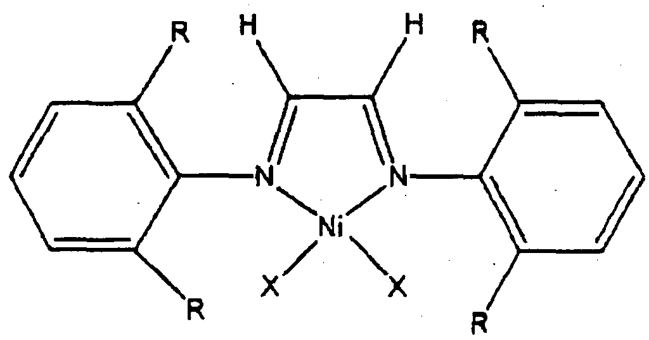

...(11)

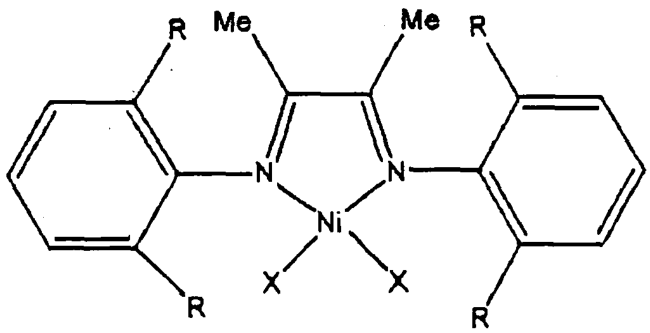

...(12)

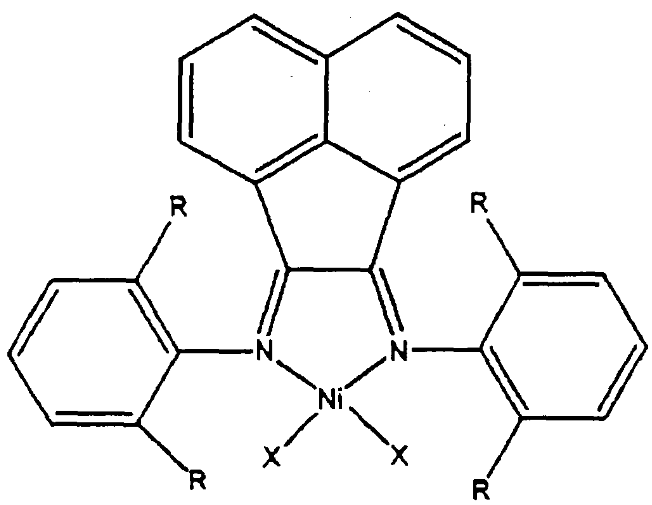

...(13)

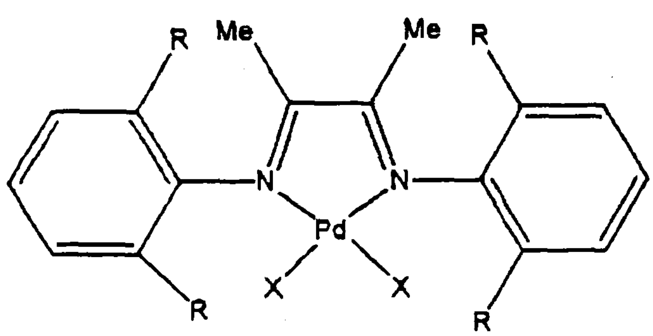

...(14)

In formulae (11) to (14), X is Cl or a methyl (Me) group; R is a methyl (Me) or isopropyl (iPr) group and may be the same at the same time or different.

Use amount of a diimine complex of nickel, palladium, and the like per 1 mol of a monomer is $1 \times 10^{-6}$ to 0.1 mol, preferably $5 \times 10^{-6}$ to $5 \times 10^{-2}$ mol, while that of aluminoxanes, it is $1 \times 10^{-6}$ to 0.1 mol, preferably $5 \times 10^{-4}$ to

0.05 mol.

Polymerization reaction is carried out at -100 to 90°C for 0.5 to 100 hours, preferably at -50 to 50°C for 1 to 50 hours.

A phenoxyimine complex of titanium, zirconium, hafnium, and the like in the above catalyst [5] composed of a phenoxyimine complex of titanium, zirconium, hafnium, and the like, along with aluminoxanes includes, for example, a compound represented by the general formula (15).

Aluminoxanes include, for example,

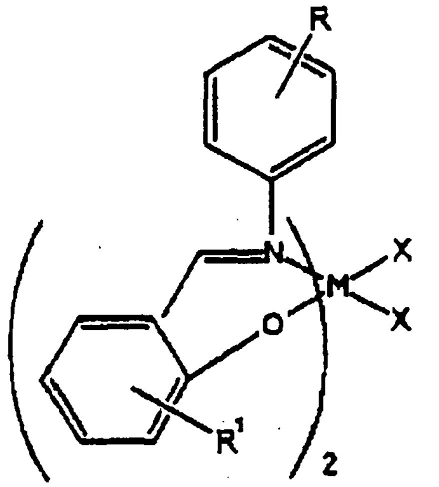

··· (15)

In formula (15), M represents any of titan, zirconium, and hafnium; each of R and R' represents a $C_{1-10}$ hydrocarbon group; and X represents any of F, Cl, Br, I or a $C_{1-8}$ alkoxyl group.

Use amount of a phenoxyimine complex of titanium, zirconium, hafnium, and the like per 1 mol of a monomer is $1 \times 10^{-6}$ to 0.1 mol, preferably $5 \times 10^{-6}$ to $5 \times 10^{-2}$ mol, while that of aluminoxane, it is $1 \times 10^{-6}$ to 0.1 mol, preferably $5 \times 10^{-4}$ to 0.05 mol.

Polymerization reaction is carried out at 0 to 200°C for 0.5 to 100 hours, preferably at 50 to 150°C for 1 to 50 hours.

A pyrroleimine complex of titanium, and the like in the above catalyst [6] composed of a pyrroleimine complex of titanium, and the like, and aluminoxanes includes, for example, a compound represented by the general formula (16).

Aluminoxanes include, for example, methylaluminoxane, ethylaluminoxane, butylaluminoxane, etc.

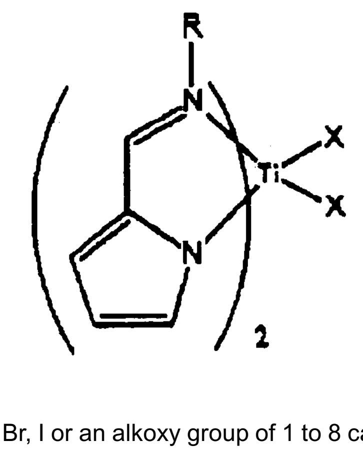

··· (16)

In formula (16), X is F, Cl, Br, I or an alkoxy group of 1 to 8 carbon atoms; and R is a phenyl group or an alkyl group of 1 to 10 carbon atoms.

Use amount of a pyrroleimine complex of titanium, and the like per 1 mol of a monomer is $1 \times 10^{-6}$ to 0.1 mol, preferably $5 \times 10^{-6}$ to $5 \times 10^{-2}$ mol, while that of aluminoxanes, it is $1 \times 10^{-6}$ to 0.1 mol, preferably $5 \times 10^{-4}$ to 0.05 mol.

Polymerization reaction is carried out at 0 to 200°C for 0.5 to 100 hours, preferably at 50 to 150°C for 1 to 50 hours.

The above catalyst [7] composed of at least one complex selected from a group consisting of an alkoxy complex, an alkylamide complex and an acetylacetone complex of Ti, Zr and Hf, along with aluminoxanes, a boron compound or an organoaluminum compound, includes, for example, a compound represented by the following general formulae (17) to (22).

$$M\ (OR)_a\ X_{4-a} \quad (17)$$

$$M\ (NR_2)_a\ X_{4-a} \quad (18)$$

$$M\ (acac)_2\ X_2 \quad (19)$$

$$[OR^4O]\ MX_2 \quad (20)$$

$$[OR^4N\ (R^5)]\ MX_2 \quad (21)$$

$$[N\ (R^5)\ R^4\ N\ (R^5)]\ MX_2 \quad (22)$$

In the above formulae (17) to (22), M is Ti, Zr and Hf; X is F, Cl, Br and I; R is a hydrocarbon group of 1 to 10 carbon atoms; $R^4$ is a divalent aromatic, alicyclic or aliphatic hydrocarbon group and/or a divalent group having a heteroatom such as oxygen, nitrogen and silicon other than C and H, such as a divalent oxygen-containing group, a divalent nitrogen-containing group and a divalent silicon-containing group; and $R^5$ is a monovalent aromatic, alicyclic or aliphatic hydrocarbon group. "acac" represents acetylacetone ligand, methylbutanedione ligand, butanedione ligand, benzoylacetone ligand, benzoyltrifluoroacetone ligand, dibenzoylmethane ligand, furoylacetone ligand, trifluoroacetylacetone ligand, 3-phenylacetylacetone ligand, 2,4-hexanedione ligand, and trifluorodimethyl-2,4-hexanedione ligand; and (a) is an integer of 2 to 4.

A hydrocarbon group $R^4$ includes, for example, a divalent saturated hydrocarbon group such as $-C_nH_{2n}-$, a divalent unsaturated hydrocarbon group such as $-C_nH_{2n-2}-$, $-C_nH_{2n-4}-$, a divalent alicyclic hydrocarbon group such as $-cycloC_mH_{2m-2}-$, a divalent hydrocarbon group containing an aromatic ring, wherein n is an integer of 1 to 10, preferably 2 to 5; and m is an integer of 5 to 15, preferably 8 to 12. A saturated hydrocarbon group may be branched besides straight chain and the branched hydrocarbon group includes, for example, a dialkylmethylene group ($R_2C=$), -CH(R)CH(R)-, $-CH(R)CH_2CH(R)-$; $R^4$ represents an oxygen or nitrogen atom containing group such as $-(CH_2)_nO(CH_2)_n-$, $-(CH_2)_nNR(CH_2)_n-$ and $-C_6H_4OC_6H_4-$ or a silicon atom containing group such as a dialkylsilylene group ($R_2Si=$). Among these groups, a divalent saturated hydrocarbon group such as $-C_nH_{2n}-$ is preferable.

A specific compound represented by $M(OR)_aX_{4-a}$, $M(NR_2)_aX_{4-a}$, $M(acac)_2X_2$ of the general formulae (17) to (19) includes $Ti(OC_2H_5)_4$, $Ti(On\text{-}C_3H_7)_4$, $Ti(Oi\text{-}C_3H_7)_4$, $Ti(On\text{-}C_4H_9)_4$, $Ti(Oi\text{-}C_4H_9)_4$, $Ti(Os\text{-}C_4H_9)_4$, $Ti(Ot\text{-}C_4H_9)_4$, $Ti(O\text{-}cyclo\text{-}C_5H_9)_4$, $Ti(OC_5H_{11})_4$, $Ti(OC_6H_5)_4$, $Ti(O\text{-}cyclo\text{-}C_6H_{11})_4$, $Ti(OC_6H_{13})_4$, $Ti(OC_2H_5)_2Cl_2$, $Ti(Oi\text{-}C_3H_7)_2Cl_2$, $Ti(On\text{-}C_3H_7)_2Br_2$, $Ti(On\text{-}C_4H_9)_2Cl_2$, $Ti(Oi\text{-}C_4H_9)_2Br_2$, $Ti(Os\text{-}C_4H_9)_2I_2$, $Ti(OC_5H_{11})_2Cl_2$, $Ti(O\text{-}cyclo\text{-}C_6H_{11})_2F_2$, $Ti[N(C_2H_5)_2]_4$, $Ti[N(n\text{-}C_3H_7)_2]_4$, $Ti[N(i\text{-}C_3H_7)_2]_4$, $Ti[N(n\text{-}C_4H_9)_2]_4$, $Ti[N(i\text{-}C_4H_9)_2]_4$, $Ti[N(s\text{-}C_4H_9)_2]_4$, $Ti[N(t\text{-}C_4H_9)_2]_4$, $Ti[N(cyclo\text{-}C_5H_9)_2]_4$, $Ti[N(C_5H_{11})_2]_4$, $Ti[N(C_6H_5)_2]_4$, $Ti[N(cyclo\text{-}C_6H_{11})_2]_4$, $Ti[N(C_6H_{13})_2]_4$, $Ti[N(C_2H_5)_2]_2Cl_2$, $Ti[N(n\text{-}C_3H_7)_2]_2Cl_2$, $Ti[N(i\text{-}C_3H_7)_2]_2Br_2$, $Ti[N(s\text{-}C_4H_9)_2]_2Cl_2$, $Ti[N(n\text{-}C_4H_9)_2]_2Br_2$, $Ti[N(t\text{-}C_4H_9)_2]_2I_2$, $Ti[N(C_5H_{11})_2]_2F_2$, $Ti[N(C_5H_{11})_2]_2Cl_2$, $Ti(acetylacetonato)_2Cl_2$, $Ti(methylbutanedionato)_2Cl_2$, $Ti(butanedionato)_2Cl_2$, $Ti(benzoylacetonato)_2Br_2$, $Ti(benzoyltrifluoroacetonato)_2F_2$, $Ti(dibenzoylmethanato)_2I_2$, $Ti(furoylacetonato)_2Br_2$, $Ti(trifluoroacetylacetonato)_2Br_2$, $Ti(2,4\text{-}hexanedionato)_2Cl_2$, $Zr(OC_2H_5)_4$, $Zr(On\text{-}C_3H_7)_4$, $Zr(Oi\text{-}C_3H_7)_4$, $Zr(On\text{-}C_4H_9)_4$, $Zr(Oi\text{-}C_4H_9)_4$, $Zr(Os\text{-}C_4H_9)_4$, $Zr(Ot\text{-}C_4H_9)_4$, $Zr(O\text{-}cyclo\text{-}C_5H_9)_4$, $Zr(OC_5H_{11})_4$, $Zr(OC_6H_5)_4$, $Zr(O\text{-}cyclo\text{-}C_6H_{11})_4$, $Zr(OC_6H_{13})_4$, $Zr(OC_2H_5)_2Cl_2$, $Zr(Oi\text{-}C_3H_7)_2Cl_2$, $Zr(On\text{-}C_3H_7)_2Br_2$, $Zr(On\text{-}C_4H_9)_2Cl_2$, $Zr(Oi\text{-}C_4H_9)_2Br_2$, $Zr(Os\text{-}C_4H_9)_2I_2$, $Zr(OC_5H_{11})_2Cl_2$, $Zr(O\text{-}cyclo\text{-}C_6H_{11})_2F_2$, $Zr[N(C_2H_5)_2]_4$, $Zr[N(n\text{-}C_3H_7)_2]_4$, $Zr[N(i\text{-}C_3H_7)_2]_4$, $Zr[N(n\text{-}C_4H_9)_2]_4$, $Zr[N(i\text{-}C_4H_9)_2]_4$, $Zr[N(s\text{-}C_4H_9)_2]_4$, $Zr[N(t\text{-}C_4H_9)_2]_4$, $Zr[N(cyclo\text{-}C_5H_9)_2]_4$, $Zr[N(C_5H_{11})_2]_4$, $Zr[N(C_6H_5)_2]_4$, $Zr[N(cyclo\text{-}C_6H_{11})_2]_4$, $Zr[N(C_6H_{13})_2]_4$, $Zr[N(C_2H_5)_2]_2Cl_2$, $Zr[N(n\text{-}C_3H_7)_2]_2Cl_2$, $Zr[N(i\text{-}C_3H_7)_2]_2Br_2$, $Zr[N(s\text{-}C_4H_9)_2]_2Cl_2$, $Zr[N(n\text{-}C_4H_9)_2]_2Br_2$, $Zr[N(t\text{-}C_4H_9)_2]_2I_2$, $Zr[N(C_5H_{11})_2]_2F_2$, $Zr[N(C_5H_{11})_2]_2Cl_2$, $Zr(acetylacetonato)_2Cl_2$, $Zr(methylbutanedionato)_2Cl_2$, $Zr(butanedionato)_2Cl_2$, $Zr(benzoylacetonato)_2Br_2$, $Zr(benzoyltrifluoroacetonato)_2F_2$, $Zr(dibenzoylmethanato)_2I_2$, $Zr(furoylacetonato)_2Br_2$, $Zr(trifluoroacetylacetonato)_2Br_2$, $Zr(2,4\text{-}hexanedionato)_2Cl_2$, $Hf(OC_2H_5)_4$, $Hf(On\text{-}C_3H_7)_4$, $Hf(Oi\text{-}C_3H_7)_4$, $Hf(On\text{-}C_4H_9)_4$, $Hf(Oi\text{-}C_4H_9)_4$, Hf

$(Os-C_4H_9)_4$, $Hf(Ot-C_4H_9)_4$, $Hf(O-cyclo-C_5H_9)_4$, $Hf(OC_5H_{11})_4$, $Hf(OC_6H_5)_4$, $Hf(O-cyclo-C_6H_{11})_4$, $Hf(OC_6H_{13})_4$, $Hf(OC_2H_5)_2Cl_2$, $Hf(Oi-C_3H_7)_2Cl_2$, $Hf(On-C_3H_7)_2Br_2$, $Hf(On-C_4H_9)_2Cl_2$, $Hf(Oi-C_4H_9)_2Br_2$, $Hf(Os-C_4H_9)_2I_2$, $Hf(OC_5H_{11})_2Cl_2$, $Hf(O-cyclo-C_6H_{11})_2F_2$, $Hf[N(C_2H_5)_2]_4$, $Hf[N(n-C_3H_7)_2]_4$, $Hf[N(i-C_3H_7)_2]_4$, $Hf[N(n-C_4H_9)_2]_4$, $Hf[N(i-C_4H_9)_2]_4$, $Hf[N(s-C_4H_9)_2]_4$, $Hf[N(t-C_4H_9)_2]_4$, $Hf[N(cyclo-C_5H_9)_2]_4$, $Hf[N(C_5H_{11})_2]_4$, $Hf[N(C_6H_5)_2]_4$, $Hf[N(cyclo-C_6H_{11})_2]_4$, $Hf[N(C_6H_{13})_2]_4$, $Hf[N(C_2H_5)_2]_2Cl_2$, $Hf[N(n-C_3H_7)_2]_2Cl_2$, $Hf[N(i-C_3H_7)_2]_2Br_2$, $Hf[N(s-C_4H_9)_2]_2Cl_2$, $Hf[N(n-C_4H_9)_2]_2Br_2$, $Hf[N(t-C_4H_9)_2]_2I_2$, $Hf[N(C_5H_{11})_2]_2F_2$, $Hf[N(C_5H_{11})_2]_2Cl_2$, $Hf(\text{acetylacetonato})_2Cl_2$, $Hf(\text{methylbutanedionato})_2Cl_2$, $Hf(\text{butanedionato})_2Cl_2$, $Hf(\text{benzoylacetonato})_2Br_2$, $Hf(\text{benzoyltrifluoroacetonato})_2F_2$, $Hf(\text{dibenzoylmethanato})_2I_2$, $Hf(\text{furoylacetonato})_2Br_2$, $Hf(\text{trifluoroacetylacetonato})_2Br_2$, $Hf(2,4\text{-hexanedionato})_2Cl_2$, etc.

A specific compound represented by $[OR^4O]\ MX_2$ of the general formula (20) includes $[OCH_2CH_2O]TiCl_2$, $[OCH_2CH_2CH_2O]TiCl_2$, $[OCH_2CH_2CH_2CH_2O]TiCl_2$, $[OCH_2CH_2OCH_2CH_2O]TiCl_2$, $[OCH_2CH_2O]Ti(CH_3)_2$, $[OCH_2CH_2CH_2O]Ti(CH_3)_2$, $[OCH_2CH_2CH_2CH_2O]Ti(CH_3)_2$, $[OCH_2CH_2OCH_2CH_2O]Ti(CH_3)_2$, $[OCH_2CH_2O]Ti(C_6H_5)_2$, $[OCH_2CH_2CH_2O]Ti(C_6H_5)_2$, $(OCH_2CH_2CH_2CH_2O)Ti(C_6H_5)_2$, $[OCH_2CH_2OCH_2CH_2O]Ti(C_6H_5)_2$, $[OCH_2CH_2O]Ti(CH_2C_6H_5)_2$, $[OCH_2CH_2CH_2O]Ti(CH_2C_6H_5)_2$, $[OCH_2CH_2CH_2CH_2O]Ti(CH_2C_6H_5)_2$, $[OCH_2CH_2OCH_2CH_2O]Ti(CH_2C_6H_5)_2$, $[OCH(C_6H_5)CH(C_6H_5)O]Ti(CH_3)_2$, $[OCH_2C(C_6H_5)_2CH_2O]Ti(CH_3)_2$, $[OCH_2CH_2O]ZrCl_2$, $[OCH_2CH_2CH_2O]ZrCl_2$, $[OCH_2CH_2CH_2CH_2O]ZrCl_2$, $[OCH_2CH_2OCH_2CH_2O]ZrCl_2$, $[OCH_2CH_2O]Zr(CH_3)_2$, $[OCH_2CH_2CH_2O]Zr(CH_3)_2$, $[OCH_2CH_2CH_2CH_2O]Zr(CH_3)_2$, $[OCH_2CH_2OCH_2CH_2O]Zr(CH_3)_2$, $[OCH_2CH_2O]Zr(C_6H_5)_2$, $[OCH_2CH_2CH_2O]Zr(C_6H_5)_2$, $[OCH_2CH_2CH_2CH_2O]Zr(C_6H_5)_2$, $[OCH_2CH_2OCH_2CH_2O]Zr(C_6H_5)_2$, $[OCH_2CH_2O]Zr(CH_2C_6H_5)_2$, $[OCH_2CH_2CH_2O]Zr(CH_2C_6H_5)_2$, $[OCH_2CH_2CH_2CH_2O]Zr(CH_2C_6H_5)_2$, $[OCH_2CH_2OCH_2CH_2O]Zr(CH_2C_6H_5)_2$, $[OCH(C_6H_5)CH(C_6H_5)O]Zr(CH_3)_2$, $[OCH_2C(C_6H_5)_2CH_2O]Zr(CH_3)_2$, $[OCH_2CH_2O]HfCl_2$, $[OCH_2CH_2CH_2O]HfCl_2$, $[OCH_2CH_2CH_2CH_2O]HfCl_2$, $[OCH_2CH_2OCH_2CH_2O]HfCl_2$, $[OCH_2CH_2O]Hf(CH_3)_2$, $[OCH_2CH_2CH_2O]Hf(CH_3)_2$, $[OCH_2CH_2CH_2CH_2O]Hf(CH_3)_2$, $[OCH_2CH_2OCH_2CH_2O]Hf(CH_3)_2$, $[OCH_2CH_2O]Hf(C_6H_5)_2$, $[OCH_2CH_2CH_2O]Hf(C_6H_5)_2$, $[OCH_2CH_2CH_2CH_2O]Hf(C_6H_5)_2$, $[OCH_2CH_2OCH_2CH_2O]Hf(C_6H_5)_2$, $[OCH_2CH_2O]Hf(CH_2C_6H_5)_2$, $[OCH_2CH_2CH_2O]Hf(CH_2C_6H_5)_2$, $[OCH_2CH_2CH_2CH_2O]Hf(CH_2C_6H_5)_2$, $[OCH_2CH_2OCH_2CH_2O]Hf(CH_2C_6H_5)_2$, $[OCH(C_6H_5)CH(C_6H_5)O]Hf(CH_3)_2$, $[OCH_2C(C_6H_5)_2CH_2O]Hf(CH_3)_2$, etc.

A specific compound represented by $[OR^4N\ (R^5)]\ MX_2$ of general formula (21) includes $[OCH_2CH_2N(CH_3)]TiCl_2$, $[OCH_2CH_2CH_2N(C_6H_5)]TiCl_2$, $[OCH_2CH_2CH_2CH_2N((i-C_3H_7)_2C_6H_3)]TiCl_2$, $[OCH_2CH_2OCH_2CH_2N(cyclo-C_6H_{11})]TiCl_2$, $[OCH_2CH_2N(CH_3)]Ti(CH_3)_2$, $[OCH_2CH_2CH_2N(C_6H_5)]Ti(CH_3)_2$, $[OCH_2CH_2CH_2CH_2N((i-C_3H_7)_2C_6H_3)]Ti(CH_3)_2$, $[OCH_2CH_2OCH_2CH_2N(cyclo-C_6H_{11})]Ti(CH_3)_2$, $[OCH_2CH_2N(CH_3)]Ti(C_6H_5)_2$, $[OCH_2CH_2CH_2N(C_6H_5)]Ti(C_6H_5)_2$, $[OCH_2CH_2CH_2CH_2N((i-C_3H_7)_2C_6H_3)]Ti(C_6H_5)_2$, $[OCH_2CH_2OCH_2CH_2N(CH_3)]Ti(C_6H_5)_2$, $[OCH_2CH_2N(i-C_3H_7)]Ti(CH_2C_6H_5)_2$, $[OCH_2CH_2CH_2N(n-C_6H_{13})]Ti(CH_2C_6H_5)_2$, $[OCH_2CH_2CH_2CH_2N(C_6H_5)]Ti(CH_2C_6H_5)_2$, $[OCH_2CH_2OCH_2CH_2N((i-C_3H_7)_2C_6H_3)]Ti(CH_2C_6H_5)_2$, $[OCH(C_6H_5)CH(C_6H_5)N(i-C_3H_7)]Ti(CH_3)_2$, $[OCH_2C(C_6H_5)_2CH_2N(C_6H_5)]Ti(CH_3)_2$, $[OCH_2CH_2N(CH_3)]ZrCl_2$, $[OCH_2CH_2CH_2N(C_6H_5)]ZrCl_2$, $[OCH_2CH_2CH_2CH_2N((i-C_3H_7)_2C_6H_3)]ZrCl_2$, $[OCH_2CH_2OCH_2CH_2N(cyclo-C_6H_{11})]ZrCl_2$, $[OCH_2CH_2N(CH_3)]Zr(CH_3)_2$, $[OCH_2CH_2CH_2N(C_6H_5)]Zr(CH_3)_2$, $[OCH_2CH_2CH_2CH_2N((i-C_3H_7)_2C_6H_3]Zr(CH_3)_2$, $[OCH_2CH_2OCH_2CH_2N(cyclo-C_6H_{11})]Zr(CH_3)_2$, $[OCH_2CH_2N(CH_3)]Zr(C_6H_5)_2$, $[OCH_2CH_2CH_2N(C_6H_5)]Zr(C_6H_5)_2$, $[OCH_2CH_2CH_2CH_2N((i-C_3H_7)_2C_6H_3)]Zr(C_6H_5)_2$, $[OCH_2CH_2OCH_2CH_2N(CH_3)]Zr(C_6H_5)_2$, $[OCH_2CH_2N(i-C_3H_7)]Zr(CH_2C_6H_5)_2$, $[OCH_2CH_2CH_2N(n-C_6H_{13})]Zr(CH_2C_6H_5)_2$, $[OCH_2CH_2CH_2CH_2N(C_6H_5)]Zr(CH_2C_6H_5)_2$, $[OCH_2CH_2OCH_2CH_2N((i-C_3H_7)_2C_6H_3)]Zr(CH_2C_6H_5)_2$, $[OCH(C_6H_5)CH(C_6H_5)N(i-C_3H_7)]Zr(CH_3)_2$, $[OCH_2C(C_6H_5)_2CH_2N(C_6H_5)]Zr(CH_3)_2$, $[OCH_2CH_2N(CH_3)]HfCl_2$, $[OCH_2CH_2CH_2N(C_6H_5)]HfCl_2$, $[OCH_2CH_2CH_2CH_2N((i-C_3H_7)_2C_6H_3)]HfCl_2$, $[OCH_2CH_2OCH_2CH_2N(cyclo-C_6H_{11})]HfCl_2$, $[OCH_2CH_2N(CH_3)]Hf(CH_3)_2$, $[OCH_2CH_2CH_2N(C_6H_5)]Hf(CH_3)_2$, $[OCH_2CH_2CH_2CH_2N((i-C_3H_7)_2C_6H_3]Hf(CH_3)_2$, $[OCH_2CH_2OCH_2CH_2N(cyclo-C_6H_{11})]Hf(CH_3)_2$, $[OCH_2CH_2N(CH_3)]Hf(C_6H_5)_2$, $[OCH_2CH_2CH_2N(C_6H_5)]Hf(C_6H_5)_2$, $[OCH_2CH_2CH_2CH_2N(i-C_3H_7)_2C_6H_3]Hf(C_6H_5)_2$, $[OCH_2CH_2OCH_2CH_2N(CH_3)]Hf(C_6H_5)_2$, $[OCH_2CH_2N(i-C_3H_7)]Hf(CH_2C_6H_5)_2$, $[OCH_2CH_2CH_2N(n-C_6H_{13})]Hf(CH_2C_6H_5)_2$, $[OCH_2CH_2CH_2CH_2N(C_6H_5)]Hf(CH_2C_6H_5)_2$, $[OCH_2CH_2OCH_2CH_2N((i-C_3H_7)_2C_6H_3)]Hf(CH_2C_6H_5)_2$, $[OCH(C_6H_5)CH(C_6H_5)N(i-C_3H_7)]Hf(CH_3)_2$, $[OCH_2C(C_6H_5)_2CH_2N(C_6H_5)]Hf(CH_3)_2$, etc.

A specific compound represented by $[N\ (R^5)\ R^4\ N\ (R^5)]\ MX_2$ of general formula (22) includes $[N(CH_3)CH_2CH_2N(CH_3)]TiCl_2$, $[N((i-C_3H_7)_2C_6H_3)CH_2CH_2CH_2N((i-C_3H_7)_2C_6H_3)TiCl_2$, $[N(C_6H_5)CH_2CH_2CH_2CH_2N(C_6H_5)]TiCl_2$, $[N(cyclo-C_6H_{11})CH_2CH_2OCH_2CH_2N(cyclo-C_6H_{11})]TiCl_2$, $[N(CH_3)CH_2CH_2N(CH_3)]Ti(CH_3)_2$, $[N(C_6H_5)CH_2CH_2CH_2N(C_6H_5)]Ti(CH_3)_2$, $[N((i-C_3H_7)_2C_6H_3)CH_2CH_2CH_2CH_2N((i-C_3H_7)_2C_6H_3)]Ti(CH_3)_2$, $[N(cyclo-C_6H_{11})CH_2CH_2OCH_2CH_2N(cyclo-C_6H_{11})]Ti(CH_3)_2$, $[N(CH_3)CH_2CH_2N(CH_3)]Ti(C_6H_5)_2$, $[N(C_6H_5)CH_2CH_2CH_2N(C_6H_5)]Ti(C_6H_5)_2$, $[N((i-C_3H_7)_2C_6H_3)CH_2CH_2CH_2N((i-C_3H_7)_2C_6H_3)]Ti(C_6H_5)_2$, $[N(CH_3)CH_2CH_2OCH_2CH_2N(CH_3)]Ti(C_6H_5)_2$, $[N(i-C_3H_7)CH_2CH_2N(i-C_3H_7)]Ti(CH_2C_6H_5)_2$, $[N(n-C_6H_{13})CH_2CH_2CH_2N(n-C_6H_{13})]Ti(CH_2C_6H_5)_2$, $[N(C_6H_5)CH_2CH_2CH_2CH_2N(C_6H_5)]Ti(CH_2C_6H_5)_2$, $[N((i-C_3H_7)_2C_6H_3)CH_2CH_2OCH_2CH_2N((i-C_3H_7)_2C_6H_3)]Ti(CH_2C_6H_5)_2$, $[N(i-C_3H_7)CH(C_6H_5)CH(C_6H_5)N(i-C_3H_7)]Ti(CH_3)_2$, $[N(C_6H_5)CH_2C(C_6H_5)_2CH_2N(C_6H_5)]Ti(CH_3)_2$, $[N(CH_3)CH_2CH_2N(CH_3)]ZrCl_2$, $[N((i-C_3H_7)_2C_6H_3)CH_2CH_2CH_2N((i-C_3H_7)_2C_6H_3]ZrCl_2$, $[N(C_6H_5)CH_2CH_2CH_2CH_2N(C_6H_5)]ZrCl_2$, $[N(cyclo-C_6H_{11})CH_2CH_2OCH_2CH_2N(cyclo-C_6H_{11})]ZrCl_2$, $[N(CH_3)CH_2CH_2N(CH_3)]Zr(CH_3)_2$, $[N(C_6H_5)CH_2CH_2CH_2N(C_6H_5)]Zr(CH_3)_2$, $[N((i-C_3H_7)_2C_6H_3)CH_2CH_2CH_2CH_2N((i-C_3H_7)_2C_6H_3)]Zr(CH_3)_2$, $[N(cyclo-C_6H_{11})CH_2CH_2OCH_2CH_2N(cyclo-C_6H_{11})]Zr(CH_3)_2$, $[N(CH_3)CH_2CH_2N(CH_3)]Zr(C_6H_5)_2$, $[N(C_6H_5)CH_2CH_2CH_2N(C_6H_5)]Zr(C_6H_5)_2$, $[N((i-C_3H_7)_2C_6H_3)CH_2CH_2CH_2N((i-C_3H_7)_2C_6H_3)]Zr(C_6H_5)_2$, $[N(CH_3)CH_2CH_2OCH_2CH_2N(CH_3)]Zr(C_6H_5)_2$, $[N(i-C_3H_7)CH_2CH_2N(i-C_3H_7)]Zr$

$(CH_2C_6H_5)_2$, $[N(n\text{-}C_6H_{13})CH_2CH_2CH_2N(n\text{-}C_6H_{13})]Zr(CH_2C_6H_5)_2$, $[N(C_6H_5)CH_2CH_2CH_2CH_2N(C_6H_5)]Zr(CH_2C_6H_5)_2$, $[N((i\text{-}C_3H_7)_2C_6H_3)CH_2CH_2OCH_2CH_2N((i\text{-}C_3H_7)_2C_6H_3)]Zr(CH_2C_6H_5)_2$, $[N(i\text{-}C_3H_7)CH(C_6H_5)CH(C_6H_5)N(i\text{-}C_3H_7)]Zr(CH_3)_2$, $[N(C_6H_5)CH_2C(C_6H_5)_2CH_2N(C_6H_5)]Zr(CH_3)_2$, $[N(CH_3)CH_2CH_2N(CH_3)]HfCl_2$, $[N((i\text{-}C_3H_7)_2C_6H_3)CH_2CH_2CH_2N((i\text{-}C_3H_7)_2C_6H_3]HfCl_2$, $[N(C_6H_5)CH_2CH_2CH_2CH_2N(C_6H_5)]HfCl_2$, $[N(cyclo\text{-}C_6H_{11})CH_2CH_2OCH_2CH_2N(cyclo\text{-}C_6H_{11})]HfCl_2$, $[N(CH_3)CH_2CH_2N(CH_3)]Hf(CH_3)_2$, $[N(C_6H_5)CH_2CH_2CH_2N(C_6H_5)]Hf(CH_3)_2$, $[N((i\text{-}C_3H_7)_2C_6H_3)CH_2CH_2CH_2CH_2N((i\text{-}C_3H_7)_2C_6H_3]Hf(CH_3)_2$, $[N(cyclo\text{-}C_6H_{11}CH_2CH_2OCH_2CH_2N(cyclo\text{-}C_6H_{11})]Hf(CH_3)_2$, $[N(CH_3)CH_2CH_2N(CH_3)]Hf(C_6H_5)_2$, $[N(C_6H_5)CH_2CH_2CH_2N(C_6H_5)]Hf(C_6H_5)_2$, $[N((i\text{-}C_3H_7)_2C_6H_3)CH_2CH_2CH_2N((i\text{-}C_3H_7)_2C_6H_3)]Hf(C_6H_5)_2$, $[N(CH_3)CH_2CH_2OCH_2CH_2N(CH_3)]Hf(C_6H_5)_2$, $[N(i\text{-}C_3H_7)CH_2CH_2N(i\text{-}C_3H_7)]Hf(CH_2C_6H_5)_2$, $[N(n\text{-}C_6H_{13})CH_2CH_2CH_2N(n\text{-}C_6H_{13})]Hf(CH_2C_6H_5)_2$, $[N(C_6H_5)CH_2CH_2CH_2CH_2N(C_6H_5)]Hf(CH_2C_6H_5)_2$, $[N((i\text{-}C_3H_7)_2C_6H_3)CH_2CH_2OCH_2CH_2N((i\text{-}C_3H_7)_2C_6H_3)]Hf(CH_2C_6H_5)_2$, $[N(i\text{-}C_3H_7)CH(C_6H_5)CH(C_6H_5)N(i\text{-}C_3H_7)]Hf(CH_3)_2$, $[N(C_6H_5)CH_2C(C_6H_5)_2CH_2N(C_6H_5)]Hf(CH_3)_2$, etc.

As aluminoxanes, boron compounds and organoaluminum compounds, those exemplified by the above [1] and [2] can be used.

Use amount of the above components is, for metal complexes, $1\times10^{-5}$ to 0.5 mole, preferably $1\times10^{-4}$ to 0.1 mole and for aluminoxanes, boron compounds and organoaluminium compounds, $1\times10^{-6}$ to 0.5 mole, preferably $1\times10^{-5}$ to 0.1 mole, based on 1 mole of a monomer used.

Polymerization reaction is carried out at -100 to 100°C for 0.5 to 50 hours, preferably at -80 to 80°C for 1 to 30 hours.

In the present invention, for example, to produce a polyolefin solution using the above polymerization catalyst, catalysts represented by the above [1] to [3], particularly a catalyst represented by the above [1] can preferably be used. When catalysts represented by the above [1] to [7] are used, hydrogen, diethyl zinc and a compound containing a Si-H bond can be added. Catalysts represented by the above [1] to [7] can also be used by being carried on a carrier such as silica, alumina, zirconia and titania.

(d) Reactor

Polymerization reaction may be carried out in any of continuous system, batch system and a combined system thereof. Therefore, a reactor may be any of tubular or tank type. For multi-step reaction, they may be used in combination, as appropriate.

A tubular type reactor may be any of a type for feeding from one end of a tube and taking out from the other end, or a type with tube structure connected in a loop.

When a tubular continuous reactor is used, a static mixer may be used for a part of or whole of the reactor. By using a static mixer, mixing state in a reactor can be improved and more uniform composition distribution and thermal distribution in radius direction of a reaction tube can be obtained. A static mixer may be used as a whole or a part of a reactor tube, and when it is used as a part of a reactor, it may be placed at any of reactor entrance vicinity, middle part or exit vicinity.

Polymerization catalyst and/or co-catalyst such as an organoaluminum compound may be charged into a reactor after dilution with a solvent in advance and it is preferable for at least one or two or more of these are charged portion wise from several positions in a tubular continuous reactor.

On the other hand, when a tank type reactor is used, to improve mixing state in a reactor and get at most uniform composition distribution and thermal distribution in the tank, it is desirable to agitate using an agitation blade having structure providing good flow not only in circumference direction but also in vertical direction in the tank. To attain such effect, it is preferable to select such an agitation system to provide maximum upstream velocity coefficient of not lower than 15% of blade tip speed.

Reaction heat may be removed by stirring using an external circulation pump to circulate a reaction solution and also at exterior of a reactor, if necessary. It is preferable to charge catalyst components portion wise and the like into a reactor continuously or intermittently after start of polymerization.

It is preferable for the above tubular reactor or the tank type reactor to have jacket type structure to control reaction temperature so as to change at minimum and for the reaction temperature control to be performed by a system to remove reaction heat through heat medium in the jacket.

Heat medium used has melting point lower than reaction temperature desirably by 20°C so as not to generate low temperature deposition during operation, specific heat at 25°C not lower than 1000 J/kg/K and heat conductivity at 25°C not lower than 0.05 W/m/K to provide good heat removal efficiency.

Because high viscosity of heat medium requires high circulation energy of heat medium and increases frictional heat in transferring of heat medium, dynamic viscosity is preferably not larger than 1 cSt at 20°C and not larger than 5 cSt at -50°C, and more preferably not larger than 0.5 cSt at 20°C and not larger than 10 cSt at -50°C. Boiling point thereof under atmospheric pressure is preferably not lower than 40°C in view of operability.

(e) Polymerization condition

In polymerization, such conditions as reaction temperature, concentration of raw material olefin monomer and catalyst concentration provide strong effects on reaction activity and molecular weight and molecular weight distribution of polyolefin generated. These polymerization conditions depend on catalyst kind used as already explained at the above sections [1] to [7] on polymerization catalysts.

It is desirable for temperature distribution and each component concentration distribution in a reactor to always keep in good stirring condition in a reactor and thus maintain them constant during polymerization reaction. Temperature distribution in a reactor after start of polymerization reaction is maintained within 10°C, preferably within 5°C and particularly preferably within 2°C.

Liquid temperature is elevated in time course in a batch system, and with progress toward downstream in a tubular continuous system unless reaction temperature is intentionally controlled, because polymerization is exothermal reaction. Change in reaction temperature exceeding intended range largely influences reaction activity or molecular weight and molecular weight distribution of a polyolefin generated. Further, rapid elevation of reaction temperature may lead to runaway reaction. Therefore, temperature change in time course in a batch system is maintained within 10°C, preferably within 5°C and particularly preferably within 2°C, as temperature difference between locations of flow pass direction in a tubular continuous system.

An olefin is preferably charged portion wise continuously or intermittently after polymerization start, because concentration of an olefin, as reaction raw material, lowers with progress of reaction. This operation is beneficial to make reaction temperature constant and to control in detail property of a polyolefin generated.

Properties of an organoaluminum compound and other catalyst components change and deteriorated with progress of reaction. Therefore, it is preferable that at least one of them or more are charged continuously or intermittently portion wise after polymerization start. This operation is also beneficial to make reaction temperature constant and control in detail property of a polyolefin generated.

(f) A polymerization terminator

Polymerization reaction can be terminated by the addition of a polymerization terminator. As a polymerization terminator, $C_{1-10}$ compounds having a hetero atom, derivatives of such as alcohols, ketones, aldehydes, carboxylic acids, amines, amides, isocyanates, sulfonic acid, thiols and phosphoric acid can be used. A compound having active hydrogen is preferable and alcohols such as methanol, ethanol, isopropanol and butanol are more preferable.

A polymerization terminator is added in the amount to deactivate catalyst components so that polymerization is not continued and not to deposit a polyolefin present in a reaction solution.

In charging a polymerization terminator, it should be cautious to secure good stirring of a reaction solution and not to deposit a polyolefin present in a reaction solution, caused by mixing of much amount of whole reaction solution and a polymerization terminator in a short time and resulting in contact of a reaction solution with a polymerization terminator in locally high concentration state.

It is preferable that a polymerization terminator is diluted with a reaction solvent in advance because charging of a polymerization terminator as a stock solution may result in contact of a polymerization terminator in high concentration state with a reaction solution. Dilution ratio is not especially limited, however, for example, weight ration of a polymerization terminator and a solvent is in the range from 5:1 to 1:10.

A polymerization terminator may be added directly into a polymerization reactor but it may also be added after a polymerization reaction solution is taken out of a reactor. However, to avoid generation of a polyolefin at most under different reaction conditions, a polymerization terminator is added in the amount not to deposit a polyolefin present in a reaction solution, after completion of polymerization reaction and before temperature of a reaction solution increases or decreases by not lower that 5°C, preferably not lower that 3°C than that after completion of polymerization reaction.

Unreacted α-olefins are removed by volatilization after termination of polymerization by reducing pressure in a reactor and/or elevating temperature of a reaction solution. Volatilization of unreacted α-olefins in deposition separation operation of catalyst components at later step may deteriorate operability and workability.

It is preferable that viscosity of a reaction solution is adjusted after termination of polymerization by removal or the addition of a solvent, to 2 to 2000 cP at 20°C, preferably 10 to 1000 cP, particularly preferably 30 to 500 cP, to improve workability in operation of insolubilization and removal of catalyst components at later step.

In a method of the present invention, a modified polyolefin solution can also be produced by not removing catalyst components as described later by subsequent addition of a modifying agent and a radical reaction initiator into a polyolefin solution obtained.

(PO1) Polyolefin

As described above, a polyolefin (PO1) is generated by polymerization of at least one or two or more α-olefins having carbon atoms of 2 to 8.

That is, polypropylene, an ethylene-propylene random copolymer, a propylene-butene random copolymer and further a block copolymer having these as a segment can be obtained. Content of ethylene or butane is preferably less than 10% by mole.

Weight average molecular weight (Mw) is 2,000 to 600,000 and particularly preferable is 5,000 to 400,000. Molecular weight distribution (Mw/Mn) is 1.01 to 10.0, preferably 1.01 to 5.0 and particularly preferably 1.01 to 2.0.

This polyolefin is present in a solution state dissolved in a solvent or in slurry state and has racemic diad fraction [r] measured by $^{13}$C-NMR of 0.12 to 0.88, preferably 0.51 to 0.88 and more preferably 0.54 to 0.84.

Racemic diad fraction [r] specified in the present invention can be obtained by a well known method to those in the art, that is, by integrated value of peak intensity assigned to stereospecific structure measured by $^{13}$C-NMR.

This polyolefin also has heat of crystal fusion of not larger than 20 J/g and insoluble matter by Soxhlet extraction in boiling n-heptane of not higher than 70% by weight.

(ii) Modification step

Modification reaction may be carried out by any of continuous system, batch system and a combination system thereof and therefore as a reactor, any of tubular and tank type may be used. In a tubular continuous reactor, at least one of a modifying agent or a radical reaction initiator can be charged portion wise from multiple positions of a reactor.

Radical modification reaction may be carried out using two or more steps of a tank type continuous reactor, wherein at least one of a modifying agent or a radical reaction initiator described later in detail can be added into at least a part of each step. When the reaction is carried out using a tank type batch reactor, they can be portion wise charged in reaction equipment, continuously or intermittently after start of radical modification reaction.

Modification reaction may be carried out in multi-steps and in this case, each reactor and reaction system is used by combination, as appropriate.

Modification reaction is carried out at temperature range of 0 to 200°C, preferably 50 to 180°C. Reaction rate at temperature below 0°C is slow and reaction at temperature over 200°C causes scission of a polyolefin molecule chain and thus not preferable. Temperature for modification reaction may be maintained constant or varied during modification reaction.

Reaction time is not shorter than 1 minute, preferably 5 minutes to 10 hours and particularly preferably 10 minutes to 5 hours. Longer reaction time improves introducing amount of modifying agents into a polyolefin.

Modification reaction may be carried out under atmospheric pressure, however, in this case, when boiling points of a modifying agent, a radical reaction initiator and/or a reaction solvent is near reaction temperature, a condenser must be installed at upper part of a tank reactor, if used, and when a tubular reactor is used, a part of a reaction solution components is vaporized to generate foam in a reactor and reduce reaction efficiency and heat conduction efficiency.

When boiling point of a modifying agent is lower than reaction temperature, reaction can not be carried out under atmospheric pressure and thus upper limit of reaction temperature is limited by boiling points of reaction solution components. When a modifying agent sublimates and a tank reactor is used, there is a problem of volatilization of a modifying agent out of a reaction system, even if a condenser is present. Therefore, modification reaction is preferably carried out under higher pressure than atmospheric pressure.

When two or more modifying agents are used, such multiple modifiers may be added to a reaction solution simultaneously or separately. For example, a modifying agent with relatively slow modification reaction rate can be added at initial stage of modification reaction, followed by the addition of a modifying agent with fast modification reaction rate at a stage when reaction has progressed to a certain level, or a modifying agent relatively stable under modification reaction conditions and little initiates reaction other than modification of a polyolefin is added once as a whole at initial stage of the start of modification reaction, followed by portion wise continuous or intermittent charging of a modifying agent relatively unstable under modification reaction conditions and easily consumed by initiation of reaction other than modification of a polyolefin.

Alternatively, only one of the modifying agents is added before elevating temperature of a reaction solution to modification reaction temperature, followed by the addition of the other modifying agent after temperature reaches to specified value or both modifying agents may be added simultaneously or sequentially after heating a reaction solution up to modification reaction temperature.

A radical reaction initiator may be added, similarly as a modifying agent, once as a whole necessary amount or portion wise. When a batch type reactor is used in modification reaction, both of a modifying agent and a radical reaction initiator may be added continuously, or any one of which may be added continuously and then the other may

be added once as a whole necessary amount or portion wise.

Suitable polymer concentration for modification reaction depends on a modifying agent used, modification temperature, objective modification degree, etc. Therefore, sequential operation such as removal of a solvent or concentration of a reaction solution of a polyolefin may be carried out simultaneously or after completion of removal operation of a polymerization terminator or a compound with a hydroxyl group, if necessary.

When modification reaction is carried out, a chain transfer modifier may be added to adjust degree of polymerization of a modifying agent, if necessary. By the addition of a chain transfer modifier, degree of polymerization of a modifying agent can be lowered and chain length can also be unified.

As a chain transfer modifier, there is no limitation as long as it is a compound enable to control degree of polymerization of said modifying agent under reaction condition, however, a typical example includes mercaptans such as t-dodecylmeracaptan; and disulfides such as bis-2-aminodiphenylsulfide, etc.

On the other hand, when modification reaction is carried out at high temperature, an antioxidant may be added to suppress decomposition reaction of a polyolefin, if necessary. An antioxidant acts as a radical catcher and/or a decomposition agent of peroxide under reaction condition and prevents thermal oxidation and deterioration of a polyolefin in modification reaction.

As an antioxidant, there is no limitation as long as it can suppress decomposition reaction of a polyolefin under reaction condition. However, when ions and/or compounds of titanium and/or vanadium are included in a polyolefin solution, it should be cautious that use of an antioxidant having a phenolic hydroxide group forms chromophore such as a quinone compound and may give coloring of a modified polyolefin solution.

Typical examples of suitable antioxidants include phosphites such as 1,1,3-tris(2-methyl-4-di-tridecylphosphite-5-t-butylphenyl)butane; thioethers such as distearyl thiodipropionate, etc.

(g) Modifying agent

As a modifying agent of a polyolefin solution, one or two or more kinds selected from a compound represented by the following general formula (A), (B) and (E), dicarboxylic acids and dicarboxylic anhydrides can be used.

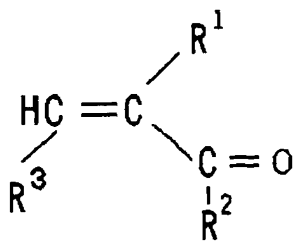
(A)

In formula (A),wherein $R^1$ represents H or a $C_{1-10}$ alkyl group; $R^2$ represents $OR^4$, any of a halogen atom selected from Cl, Br, F or I, a $NR^1_2$ or $R^5$-$NR^1_2$ group; $R^3$ represents H or a -$COR^2$ group, wherein $R^4$ represents H or a $C_{1-10}$ alkyl group which may have a halogen atom, a aromatic group which may have a $C_{1-10}$ alkyl group, $-(CH_2)_a$-O-P(O)$(OR^1)_2$, $-(CH_2)_a$-O-P(O)$(O^-)$(O-$(CH_2)_b$-$N^+R^1_3$) (a and b represent integers of 1 to 5), any alkali metal M selected from Li, Na and K, a $C_{5-10}$ alicyclic hydrocarbon group, a glycidyl group, $R^5$-$COCR^1$=$CH_2$, $R^5OR^1$, $R^5Si(OR^1)_3$ or $R^5$-NCO, wherein $R^5$ represents a $C_{1-10}$ alkylene group or $-[(CH_2)_q$-O-$]_r$- group; and q and r represent integers of 1 to 5.

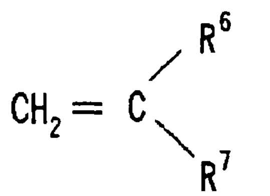
(B)

In formula (B), wherein $R^6$ represents H, a $C_{1-10}$ alkyl group or any halogen selected from Cl, Br, F or I; $R^7$ represents any of Ar-X', OCO-$R^6$, CHO, $COR^6$, CN, a pyridyl group, a pyrrolidonyl group, $Si(OR^1)_3$, a halogenated $C_{1-10}$ alkyl group, a halogen group, $OR^6$, $OSOM_3$ or NH-CO-$R^6$ wherein X' represents any of $R^6$, OH, COOH, $NH_2$, CN, $NO_2$, a halogenated $C_{1-10}$ alkyl group, CH=$CH_2$ or OCO-$R^6$; $R^1$ represents H or a $C_{1-10}$ alkyl group; and M represents the above mentioned alkali metal.

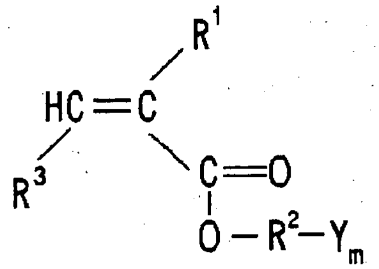

...(E)

In formula (E), wherein $R^1$ represents H or a $C_{1-10}$ alkyl group; $R^2$ represents a divalent or higher hydrocarbon group or an oxygen containing hydrocarbon group; $R^3$ represents H or a hydrocarbon group; Y represents a hydroxyl group and/or an isocyanate group; and m represents an integer of 1 to 10.

As a compound represented by the above general formula (A) and as (meth)acrylic acid derivatives other than (meth)acrylic acid, the following compounds are included:

alkyl esters such as methyl acrylate, ethyl acrylate, n-butyl acrylate, isobutyl acrylate, t-butyl acrylate, cyclohexyl acrylate, 2-ethylhexyl acrylate, n-octyl acrylate, triphenylmethyl acrylate, methyl methacrylate, ethyl methacrylate, n-butyl methacrylate, isobutyl methacrylate, t-butyl methacrylate, cyclohexyl methacrylate, 2-ethylhexyl methacrylate, n-octyl methacrylate, triphenylmethyl methacrylate; glycidyl esters such as glycidyl acrylate and glycidyl methacrylate; (meth)acrylic acid alkali metal salts such as sodium acrylate, potassium acrylate, lithium acrylate, sodium methacrylate, potassium methacrylate and lithium methacrylate; (meth)acryloyl halides such as acryloyl chloride, acryloyl bromide, methyl α-chloroacrylate, methacryloyl chloride, methacryloyl bromide and methyl α-chlorometacrylate; derivatives of amino group containing (meth)acrylic acid such as acrylamide, N,N-dimethyl acrylamide, N,N-diisopropyl acrylamide, methacrylamide, N,N-dimethyl methacrylamide, N,N-diisopropyl methacrylamide, N,N-dimethylaminoethyl acrylate and N,N-dimethylaminoethyl methacrylate; di(meth)acrylates such as ethylene glycol diacrylate, diethylene glycol diacrylate, dipropylene glycol diacrylate, 1,4-butanediol diacrylate, 1,6-hexanediol diacrylate, ethylene glycol dimethacrylate, dipropylene glycol dimethacrylate, 1,4-butanediol dimethacrylate and 1,6-hexanediol dimethacrylate; derivatives of a hydroxy group or an alkoxyl group containing (meth)acrylic acid such as 2-hydroxyethyl acrylate, 3-hydroxypropyl acrylate, 4-hydroxybutyl acrylate, trimethoxysilylpropyl acrylate, 2-methoxyethyl acrylate, 2-hydroxyethyl methacrylate, 3-hydroxypropyl methacrylate, 4-hydroxybutyl methacrylate, 2-methoxyethyl methacrylate and trimethoxysilylpropyl methacrylate; derivatives of an isocyanato group containing (meth)acrylic acids such as 2-isocyanatoethyl methacrylate and 2-isocyanatoethyl acrylate; and phosphorus atom containing (meth)acrylic acid derivatives such as ethylene glycol methacrylate phosphate and 2-methacryroyloxyethyl phosphorylcholine. Further as other P containing (meth)acrylic acid derivatives, $CH_2=C(CH_3)CO-O-CH_2-CH_2(CH_2Cl)-O-PO(OH)_2$, $CH_2=C(CH_3)CO-O-CH_2-CH_2-O-PO(OH)-O-NH_3(CH_2CH_2OH)$, etc. are included.

As a compound represented by the general formula (A) in the present invention, acrylic acid, methacrylic acid or alkyl esters thereof, glycidyl esters and OH group or alkoxy group containing (meth)acrylic acid derivatives thereof are preferable.

As a compound represented by the general formula (B), the following are included.

nitrile compounds such as acrylonitrile and methacrylonitrile; vinyl compounds such as vinyl chloride, vinyl bromide, vinyl fluoride, vinyl iodide, vinylidene chloride, sodium vinyl sulfonate, potassium vinyl sulfonate, lithium vinyl sulfonate, methyl vinyl ether, ethyl vinyl ether, isobutyl vinyl ether, vinylpyridine, N-vinylpyridine, vinylpyrrolidone, acrolein, methyl vinyl ketone, isobutyl vinyl ketone, vinyl acetate, vinyl propionate, vinyl butyrate, vinyltrimethylsilane, vinyltriethoxysilane, vinylacetamide, N-vinyl acetamide and allyl chloride; styrenic derivatives such as styrene, hydroxystyrene, aminostyrene, divinylbenzene, vinylbenzoic acid, cyanostyrene, nitrostyrene, chloromethylstyrene, α-methylstyrene, p-methylstyrene, acetoxystyrene and p-dimethylaminomethylstyrene.

As a compound represented by the general formula (B) in the present invention, styrene derivatives are particularly preferable.

As a compound represented by the general formula (E), the following are included in addition to hydroxymethyl acrylate ($CH_2=CH-COO-CH_2-OH$) and 1-hydroxyethyl acrylate):

hydroxyl-n-propyl acrylate, hydroxyl-i-propyl acrylate, hydroxyl-n-butyl acrylate, hydroxyl-i-butyl acrylate, hydroxyl-n-pentyl acrylate, i-pentyl acrylate, hydroxyl-i-neopentyl acrylate, diethylene glycol monoacrylate

($CH_2$=CH-COO-$C_2H_4$O-$C_2H_4$-OH), triethylene glycol monoacrylate ($CH_2$=CH-COO-($C_2H_4$O)$_2$-$C_2H_4$-OH), tetraethylene glycol monoacrylate ($CH_2$=CH-COO-($C_2H_4$O)$_3$-$C_2H_4$-OH), dipropylene glycol monoacrylate ($CH_2$=CH-COO-$C_3H_6$O-$C_3H_6$-OH), tripropylene glycol monoacrylate ($CH_2$=CH-COO-($C_3H_6$O)$_2$-$C_3H_6$-OH) and tetrapropylene glycol monoacrylate ($CH_2$=CH-COO-($C_3H_6$O)$_3$ -$C_3H_6$-OH).

And also included are aliphatic compounds such as dibutylene glycol monoacrylate ($CH_2$=CH-COO-$C_4H_8$O-$C_4H_8$-OH), tributylene glycol monoacrylate ($CH_2$=CH-COO-($C_4H_8$O)$_2$-$C_4H_8$-OH), tetrabutylene glycol monoacrylate ($CH_2$=CH-COO-($C_4H_8$O)$_3$-$C_4H_8$-OH), dipentene glycol monoacrylate ($CH_2$=CH-COO-$C_5H_{10}$O-$C_5H_{10}$-OH), tripentene glycol monoacrylate ($CH_2$=CH-COO-($C_5H_{10}$O)$_2$-$C_5H_{10}$-OH), tetrapentene glycol monoacrylate ($CH_2$=CH-COO-($C_5H_{10}$O)$_3$-$C_5H_{10}$-OH), dihexene glycol monoacrylate ($CH_2$=CH-COO-$C_6H_{12}$O-$C_6H_{12}$-OH), trihexene glycol monoacrylate ($CH_2$=CH-COO-($C_6H_{12}$O)$_2$-$C_6H_{12}$-OH) and tetrahexene glycol monoacrylate ($CH_2$=CH-COO-($C_6H_{12}$O)$_3$-$C_6H_{12}$-OH); alicyclic compounds such as cyclopentanediol monoacrylate, 1,2-cyclopentanedimethanol monoacrylate, 1,3-cyclopentanedimethanol monoacrylate, 1,2-cyclohexanedimethanol monoacrylate, 1,3-cyclohexanedimethanol monoacrylate and 1,4-cyclohexanedimethanol monoacrylate; aromatic group containing compounds such as 1,4-xylylenediol monoacrylate, bisphenol A monoacrylate and vinylcyclohexanediol monoacrylate.

Furthermore, the following can also be used: glycerinic compounds such as glycerin monoacrylate ($CH_2$=CH-COO-$C_3H_5$-(OH)$_2$) and glycerin diacrylate (($CH_2$=CH-COO)$_2$-$C_3H_5$-OH); trimethylolethane derivatives such as trimethylolethane monoacrylate ($CH_2$=CH-COO-$CH_2$-C($CH_3$)($CH_2$OH)$_2$); multi acrylate groups containing compounds such as trimethylolethane diacrylate ($CH_2$=CH-COO-$CH_2$)$_2$-C($CH_3$)$CH_2$OH); trimethylol propane derivatives such as trimethylol propane monoacrylate ($CH_2$=CH-COO-$CH_2$-C($CH_2CH_3$)($CH_2$OH)$_2$), trimethylol propane diacrylate (($CH_2$=CH-COO-$CH_2$)$_2$-C($CH_2CH_3$)$CH_2$OH), ditrimethylol propane monoacrylate ($CH_2$=CH-COO-$CH_2$-$C_8H_{14}$O-($CH_2$OH)$_3$), ditrimethylol propane diacrylate (($CH_2$=CH-COO-$CH_2$)$_2$-$C_8H_{14}$O-($CH_2$OH)$_2$) and ditrimethylol propane triacrylate (($CH_2$=CH-COO-$CH_2$)$_3$-$C_8H_{14}$O-$CH_2$OH); pentaerythritol derivatives having structure of such as pentaerythritol monoacrylate ($CH_2$=CH-COO-$CH_2$-C($CH_2$OH)$_3$), pentaerythritol diacrylate (($CH_2$=CH-COO-$CH_2$)$_2$-C($CH_2$OH)$_2$), pentaerythritol triacrylate (($CH_2$=CH-COO-$CH_2$)$_3$-C$CH_2$OH), dipentaerythritol monoacrylate ($CH_2$=CH-COO$CH_2$-$C_4H_4$O-($CH_2$OH)$_5$) and dipentaerythritol polyacrylate (($CH_2$=CH-COO$CH_2$)$_b$-$C_4H_4$O-($CH_2$OH)$_{6-b}$) (wherein b is an integer of 2 to 5).

When Y is isocyanato group in the general formula (E), a compound in accordance with the above case of a compound with a hydroxyl group is used. In this case, an isocyanato group may directly be bonded to a benzene ring. Therefore, structure where the above hydroxyl group is substituted with an isocyanato group as a whole or partially, or structure obtained by reaction between the above compound and diisocyanate can be adopted.

Typical examples of compounds with structure where the above hydroxyl group is substituted with an isocyanato group includes isocyanatomethyl acrylate, isocyanatoethyl acrylate, isocyanatopropyl acrylate, isocyanatobutyl acrylate, isocyanatopentyl acrylate, etc.

On the other hand, an isocyanate compound may have structure obtained by reaction between the above hydroxyl group containing compound and diisocyanate. In this case, a diisocyanate may any of an aliphatic diisocyanate, an alicyclic diisocyanate or an aromatic diisocyanate. In addition, vinyl isocyanate ($H_2C$=CH-NCO) or isopropenyl isocyanate ($H_2C$=CH($CH_3$)-NCO) can also be used.

As a compound represented by the general formula (E) in the present invention, hydroxyalkyl (meth)acrylate and isocyanatoalkyl (meth)acrylate are preferable and typically hydroxyethyl (meth)acrylate, hydroxypropyl (meth)acrylate, hydroxybutyl (meth)acrylate and 2-isocyanatoethyl (meth)acrylate are particularly preferable.

In the general formula (E), when a modifying agent has an active hydrogen such as an alcoholic hydroxyl group, it is preferable that the hydroxyl group, and the like is used by protection in advance with a complexing agent such as an organoaluminum compound. Complexing condition and the like are the same as shown in "section 4. Other production examples of a modified polyolefin solution".

As a dicarboxylic acid as a modifying agent, the following can be used: an unsaturated aliphatic dicarboxylic acid such as maleic acid, citraconic acid, fumaric acid, itaconic acid, mesaconic acid, glutaconic acid, vinylmaleic acid and allylsuccinic acid; unsaturated aliphatic dicarboxylic acid esters derivatives and the like such as dimethyl maleate and diethyl fumarate; cycloalkene dicarboxylic acid and derivatives thereof such as tetrahydrophthalic acid and tetrahydroterephthalic acid. Moreover dicarboxylic anhydride such as maleic anhydride, itaconic anhydride, citraconic anhydride, tetrahydrophthalic anhydride, endo-methylene tetrahydrophthalic anhydride and methyl-endo-methylene tetrahydrophthalic anhydride can be used.

When, for example, maleic anhydride is used as a modifying agent, and such a process is adopted where maleic anhydride is charged as solid using a hopper, maleic anhydride may sometimes adheres around the hopper which makes charging into a reactor difficult, because maleic anhydride has low melting point of 60°C and sublimates. Therefore, maleic anhydride is preferably added to a reactor by dissolving in a solvent in advance or as liquid state by heating and melting.

Further, it is preferable that solid state maleic anhydride, liquid state maleic anhydride by heating and melting

and a maleic anhydride solution dissolved in a solvent are added into a reactor after storing under relative humidity of not higher than 50%.

(h) Radical reaction initiator

As a radical reaction initiator, an azo compound or an organic peroxides is used. Any one generally used as a reaction initiator in radical polymerization can be used.
However, due to shortening of half life of a radical reaction initiator with increase in temperature, when such a radical reaction initiator as has short half life at low temperature is used in high temperature modification reaction, radicals in a reaction system rapidly disappear and reduces modification efficiency. On the other hand, when such a radical reaction initiator as has long half life even at high temperature is used in low temperature modification reaction, generation of radicals in a reaction system is little and reduces modification efficiency.
Therefore, it is preferable to select a radical reaction initiator depending on temperature for modification reaction, as appropriate. As for selection of a radical reaction initiator, half life at modification reaction temperature is preferably in the range of 0.5 to 60 minutes and more preferably in the range of 2 to 30 minutes.
A radical reaction initiator may be used alone or in combination of two or more. When two or more multiple radical reaction initiators are used, they may be added simultaneously or separately into a reaction solution. For example, a radical reaction initiator with long half life may be added once as a whole at the start stage of modification reaction, followed by portion wise charging of a radical reaction initiator with short half life, continuously or sequentially.
The addition amount of a radical reaction initiator is preferable 0.05 to 50% by weight based on a polyolefin, more preferable 0.1 to 30% by weight and further preferable 1 to 10% by weight. The addition amount less than 0.05% by weight provides low modification efficiency and leaves much amount of unreacted modifying agents in a reaction system, and it causes reduced adhesion or durability of adhesive strength, when purification of a modified polyolefin solution is not carried out after modification, and also deteriorates economy of purification step when purification of a modified polyolefin solution is carried out after modification. On the other hand, the addition amount over 50% by weight provides low modification degree of a polyolefin and also promotes molecular weight lowering of a polyolefin under modification reaction condition.
A suitable and typical example of a radical reaction initiator includes azo compounds such as azobisisobutyronitrile; ketone peroxides such as 1,1-bis-tert-butylperoxy-3,3,5-trimethylcyclohexane; dialkyl peroxides such as dicumyl peroxide; hydroperoxides such as 2,5-dimethylhexane-2,5-dihydroperoxide; dialkylperoxides such as benzoyl peroxide; peroxyesters such as 2,5-dimethyl-2,5-di-t-butylperoxyhexane and 2,5-dimethyl-2,5-dibenzoylperoxyhexane; diphenylbutane derivatives such as 2,3-dimethyl-2,3-diphenylbutane; and t-butylperoxyethyl hexanoate.
Although, removal of catalyst components will be described later, a polyolefin reaction solution after removal of catalyst components before modification contains a polymerization terminator, and also it may contain a compound with a hydroxyl group. These compounds react with a modifying agent used in a modification step and thus may lower modification efficiency. Therefore, it is preferable that a polymerization terminator or a compound with a hydroxyl group is removed from a reaction solution of a polyolefin by distillation, and the like before a modification step.
Into a reaction solution after completion of modification reaction, a solvent may be added, if necessary, or a solvent may be removed under normal pressure or reduced pressure to adjust concentration of a modified polyolefin.
Into a reaction solution, a lower polar solvent than a reaction solvent may also be added to deposit, for example, unreacted solid modifying agents such as maleic anhydride, maleic acid and/or fumaric acid, and/or derivatives of said modifying agents and remove the deposit by solid-liquid separation.

(PO2) Modified polyolefin

By the above modification reaction, a modified polyolefin (PO2) can be produced by modification the polyolefin (PO1) with the above modifying agent unit. That is, a solution of a high functional modified polyolefin useful to various applications can be produced by a simple process efficiently and economically.
A modified polyolefin produced by the present invention has modifiers grafted onto polyolefin main chains.
In the present invention, introduction amount of modifying agents onto a polyolefin, that is, modification amount is 0.5 to 100, preferably 1 to 50 modifier monomers based on 1 molecular chain of a polyolefin.

(iii) Catalyst removal step

Catalyst removal step from a reaction solution containing a polyolefin includes (a) catalyst insolubilization step and (b) removal step of thus insolubilized catalyst. For (a) catalyst insolubilization step, a method for adding a compound with a hydroxyl group to insolubilize only catalyst components or a method for adsorbing to an adsorbent is adopted.

(a) Catalyst insolubilization

Catalyst can be separated and removed by solid-liquid separation without deposition of a polyolefin, because by the addition of a compound with a hydroxyl group into a reaction solution of a polyolefin, catalyst metal components present as polyvalent metal ions are insolubilized and deposited.

A compound with a hydroxyl group used in the present invention includes, for example, at least one compound selected from water, an alcohol, a polyvalent alcohol and a carboxylic acid. It is preferable to select, among these compounds with a hydroxyl group, the same compound as a polymerization terminator. This is because by using the same compound, a solvent storage tank or distillation facility for solvent purification is commonly used and leads to process simplification.

As the above alcohol, a $C_{1-10}$ aliphatic alcohol is preferable, and a $C_{1-6}$ aliphatic alcohol is more preferable, a $C_{1-4}$ aliphatic alcohol is further preferable and particularly preferable ones are methyl alcohol, ethyl alcohol, propyl alcohol and butyl alcohol. These alcohols are used as reaction terminators to deactivate catalyst in polymerization reaction but they can also insolubilize catalyst by adding into a reaction solution.

As polyvalent alcohols, $C_{1-5}$ glycols are preferable, including such as ethylene glycol, propylene glycol, trimethylene glycol and 1,4-butanediol. Trivalent or higher valent alcohols include glycerine, trimethylolethane, erythritol, pentaerythritol, etc.

As the above carboxylic acid, aliphatic monocarboxylic acids and polycarboxylic acids are included. Typically, for example, formic acid, acetic acid, propionic acid, oxalic acid, malonic acid and succinic acid are included.

The addition amount of a compound with a hydroxyl group depends on kind of a compound with a hydroxyl group, kind of catalyst, kind of a reaction solution, concentration of a polyolefin present in a reaction solution, and the like and such amount is preferable as not to deposit a polyolefin in a reaction solution and not to separate a reaction solution into two layers.

The addition amount is preferably 1 to 100% by weight based on the amount of solvent such as benzene, toluene and xylene in a reaction solution, more preferably 3 to 25% by weight and particularly preferably 4 to 15% by weight. The addition amount of a compound with a hydroxyl group less than the above range is not enough to deposit catalyst components and the amount over the above range tends to deposit a polyolefin and thus not preferable.

In insolubilization of catalyst, alkaline components other than a compound with a hydroxyl group can be added to a reaction solution of a polyolefin, if necessary. By the addition of alkaline components, halogen components, if present in polymerization catalyst components, can be removed.

As alkaline components, metal alkolate, alkali metal hydroxide, etc. are included. Typical compound examples include, for example, sodium methoxide, sodium ethoxide, potassium methoxide, potassium ethoxide, sodium hydroxide, potassium hydroxide, etc. These compounds are added into a reaction solution as a methanol solution or ethanol solution.

The alkaline components may be added before the addition of the above compound with a hydroxyl group into a reaction solution of a polyolefin, however, it is preferable to be added after or at the same time of the addition of the compound with a hydroxyl group and it is particularly preferable that the alkaline components and the compound with a hydroxyl group are added at the same time. The addition amount of the alkaline components is not especially limited as long as they provide a reaction solution of a polyolefin with pH of not lower than 5. However, the upper limit of the addition amount is such level as to provide a reaction solution of polyolefin with pH of 9, preferably pH of 8, more preferably pH of 7.

To insolubilize, precipitate and deposit catalyst components by the addition of the compound with a hydroxyl group, the following conditions are preferable.

Time for the addition and mixing is preferably not shorter than 1 minute, more preferably not shorter than 3 minute and particularly preferably not shorter than 5 minute. Mixing time shorter than 1 minute is insufficient to make catalyst components insoluble.

Mixing temperature depends on kind of the compound with a hydroxyl group used, however, it is from room temperature to 120°C, preferably from 30 to 100°C and more preferably from 40 to 80°C. Mixing temperature lower than room temperature provides very slow reaction for insolubilization and deposition of catalyst components, while mixing temperature over 120°C provides insufficient progress of insolubilization reaction of catalyst components. For example, when methanol is used as the compound with a hydroxyl group, evaporation becomes fierce at 55°C or higher and precipitation generation does not progress sufficiently.

By contacting an adsorbent with a reaction solution of a polyolefin, catalyst components present as polyvalent metal ions are adsorbed onto an adsorbent without deposition of polyolefin and thus separated and removed by solid-liquid separation, wherein at least a part of this solid-liquid separation operation can be carried out using a filtration method and/or a centrifugal separation method.

An adsorbent includes a polymer coagulant, an ion exchange resin, a chelating resin, and the like and they may be used alone or in combination of two or more kinds.

As the above polymer coagulant, any of an anionic, cationic, nonionic type polymer coagulant can be used.

An anionic polymer coagulant includes sodium alginate, poly(sodiumacrylate), (acrylamide/sodiumacrylate) copolymer, partially hydrolyzed products of polyacrylamide, etc.

A cationic polymer coagulant includes water-soluble aniline resin hydrochloride, poly(ethylene imine), polyamine, polydiallyldimethylammonium chloride, chitosan, hexamethylenediamine, polycondensates of epichlorohydrin, polyvinylimidazoline, polyalkylamino acrylate, polyalkylamino methacrylate, Mannich reaction products of polyacrylamide, etc.

A nonionic polymer coagulant includes polyalkylamide, polyethylene oxide, etc.

It is preferable that a polymer coagulant is used by adding into a reaction solution of polyolefin as an aqueous solution with viscosity of not higher than 1000 cp. Concentration of an aqueous solution in this case is preferably 0.01 to 5% by weight, more preferably 0.1 to 2% by weight and particularly preferably 0.1 to 1% by weight.

A polymer coagulant and a polyolefin solution are contacted each other by the addition of a polymer coagulant into a polyolefin solution and stirring. The addition amount of a polymer coagulant depends on kinds of polymerization catalyst and reaction solvent, concentration of polyolefin present in a reaction solution, and the like, however, it is preferably 0.2 to 40% by volume, more preferably 0.5 to 20% by volume and particularly preferably 0.5 to 10% by volume, as the above aqueous solution, based on a polyolefin reaction solution. The addition amount of a polymer coagulant below the above range provides insufficient adsorption of catalyst components, while the amount over the above range tends to deposit polyolefin and thus not preferable.

The above ion exchange resin includes a cation exchange resin, an anion exchange resin and an amphoteric ion exchange resin, however, in the present invention, a cation exchange resin is preferable and in particular, a strong acidic cation exchange resin is preferable. A strong acidic cation exchange resin has polystyrene base structure bonded with a sulfonic acid group and easily adsorbs catalyst polyvalent metal ions present in a polyolefin solution.

An ion exchange resin and a polyolefin solution are contacted each other by the addition of an ion exchange resin into a polyolefin solution and stirring. The addition amount of an ion exchange resin depends on kinds of polymerization catalyst and a reaction solvent, concentration of polyolefin present in a reaction solution, and the like, however, it is preferably 0.2 to 40% by volume, more preferably 0.5 to 35% by volume and particularly preferably 0.5 to 25% by volume based on a polyolefin solution. The addition amount of an ion exchange resin below the above range provides insufficient adsorption of metal catalyst components, while the amount even over the above range does not exert improved adsorption effect and thus not economical.

The above chelate resin is one to form chelate with metal ions of such as transition metals and alkaline earth metals and can remove heavy metals in a solution by selective adsorption. In the present invention, it is preferable to used a chelate resin mainly having polystyrene base structure bonded with an iminodiacetonato group and a polyamine group.

A chelate resin and a polyolefin solution are contacted each other by the addition of a chelate resin into a polyolefin solution and stirring. The addition amount of a chelate resin into a polyolefin solution depends on kinds of polymerization catalyst and a reaction solvent, concentration of polyolefin present in a reaction solution, and the like, however, it is preferably 0.2 to 40% by volume, more preferably 0.5 to 20% by volume and particularly preferably 0.5 to 15% by volume based on a polyolefin solution. The addition amount of a chelate resin below the above range provides insufficient adsorption of catalyst components, while the amount even over the above range does not exert improved adsorption effect and thus not economical.

As an adsorbent, other than the above, polyacrylic acid and crosslinked beads of polyacrylic acid, and the like are included.

In the addition of an absorbing agent, a surfactant may be added into a polyolefin solution, if necessary. In particular, when a surfactant is added in the addition of an adsorbent (for example, a polymer coagulant) as an aqueous solution, it accelerates mixing with a reaction solution and thus make quick adsorption of catalyst components.

The above surfactant is not especially limited, and includes, for example, nonylphenol type, alkylphenol type, higher alcohol type, polyalkylene glycol type (EO/PO type), fatty acid ester type, alkylolamide type, alkylamide and EO adducts, alkylamine and EO/PO adducts, alkylamine oxide, etc.

The addition amount of a surfactant is preferably 0.001 to 1% by volume, more preferably 0.01 to 0.8% by volume and particularly preferably 0.05 to 0.5% by volume based on a polyolefin solution. The addition amount of a surfactant below the above range cannot promote mixing between an aqueous solution containing an adsorbent and a polyolefin solution, while the amount over the above range may impair final products.

Alkaline components may be added with an adsorbent into a polyolefin solution. The alkaline components may be added after the addition of the adsorbent, however, it is preferable that the alkaline components are added first. The addition amount of alkaline components is not especially limited as long as it provides a reaction solution of polyolefin with pH of not lower than 5. However, the upper limit of the addition amount is such level as to provide a reaction solution with pH of 9, preferably pH of 8, more preferably pH of 7.

To adsorb catalyst components by the addition of an adsorbent to a polyolefin solution and stirring a solution,

the following conditions are preferable.

Addition temperature of an adsorbent is preferably from 0 to 70°C, more preferably from 5 to 60°C and particularly preferably from 10 to 50°C. Stirring and mixing temperature depends on kind of an adsorbent used, however, it is 0 to 60°C, preferably from 5 to 50°C and more preferably from 10 to 40°C. Mixing temperature lower than 0°C provides very slow adsorption reaction of catalyst components, while mixing temperature over 60°C provides insufficient adsorption of catalyst components. Further, stirring and mixing time depends on stirring speed, however, it is preferably 1 minute to 5 hours, more preferably 5 minutes to 2 hours and particularly preferably 10 minutes to 1 hour. Stirring and mixing time shorter than 1 minute does not promote adsorption, while too long time may cause elimination of metal ions once adsorbed.

When an ion exchange resin, a chelate resin, crosslinked beads of polyacrylic acid, and the like are used as an adsorbent, a polyolefin solution can be purified by directly passing a polyolefin solution through an ion exchange resin, a chelate resin, crosslinked beads of polyacrylic acid, and the like filled in a column, without stirring and mixing treatment as described in the above adsorption condition. Temperature for passing through the column is preferably 0 to 70°C, more preferably 5 to 60°C and particularly preferably 10 to 50°C and passing time is preferably, as space velocity, 0.01 to 5 $hr^{-1}$, more preferably 0.1 to 4 $hr^{-1}$ and particularly preferably 0.5 to 3 $hr^{-1}$.

Insolubilization of catalyst components may be omitted depending on catalyst used, such as when the above catalysts [1] to [7] are used as carried state on a carrier, they are already insolubilized state in a solution.

(b) Removal of catalyst components

In the present invention, after insolubilization of catalyst components under the above condition, they are removed from a reaction solution. A removal method is not especially limited and solid-liquid separation methods to separate liquid and solid, such as a filtration method, centrifugal separation method, decantation method, and the like can be used.

As the above filtration method, any filtration methods performed under pressure, under reduced pressure and under centrifugal condition can be used and two or more kinds of methods may be combined. As filtration material, filter paper, filter cloth, membrane filter, sintered metal, and the like can be used. Filter cloth material is not especially limited as long as it does not dissolve or not largely swell or largely lowers strength by contact with a reaction solution. Usually a filter made of cotton or a polyester can be used.

Filtration temperature is from room temperature to 80°C, preferably 30 to 75°C and more preferably 40 to 70°C. Filtration temperature below room temperature increases viscosity of a reaction solution and provides poor filtration efficiency. While, high filtration temperature decreases solution viscosity and thus improves filtration speed. Pressure filtration enables filtration at boiling point or higher temperature of a reaction solvent. Filtration pressure depends on a filter apparatus, property of filter paper, and the like, however such a method is preferable as to gradually increase pressure by observation of filtering state. For example, in filtration using filter paper, final maximum pressure is not higher than 400 kPaG, preferably not higher than 300 kPaG.

A filtration coagent may be used to promote filtration treatment. A filtration coagent is not especially limited and includes, for example, one or more members selected from, for example, diatomite, cellulose, asbestos, Celite®, perlite, white clay, silica or alumina can be used and as for cellulose, such as microfibrous cellulose can be used. The addition amount of a filtration coagent is 0 to 25% by weight, preferably 0 to 20% by weight and more preferably 0 to 15% by weight based on a polyolefin solution.

In certain filtration method, clogging of filtration cloth at early stage can be prevented by precoating of a filtration coagent on filtration cloth before start of filtration. Thickness of precoating layer is not especially limited as long as it is not thinner than the amount sufficient to nearly uniformly disperse a filtration coagent on filtration cloth, and not thicker than the amount to lower filtration speed and it is preferably in the range of 0.5 to 30 mm and more preferably 1.5 to 10 mm.

Precoating operation is carried out so that a filtration coagent is uniformly dispersed on filtration cloth by the addition of a filtration coagent in a solvent, followed by preparation of a solution uniformly suspended with a filtration coagent, closing downstream side of a filter to avoid filtrate to flow out of a filter and gradually charging the suspension liquid, or by charging the suspension liquid in a filter and stirring in a filter before filtration. When precoating is carried out, it should be careful in view of equipment and/or operation not to cause local peeling of a precoated layer, because in adopting a system to generate abrupt collision at a part of a filter cloth when a reacting solution is charged, local peeling of a precoated layer significantly lowers effect of the precoated layer.

When deposit on filtering cloth is not raked off by continuous operation, and the like, deposit amount on filtration cloth gradually increases with progress of filtration operation, resulting in gradual decrease in filtration speed. In such a case, by the addition of a filtration coagent in a reaction solution in advance, followed by uniform mixing, charging into a filter and then filtration operation, decrease in filtration speed can be suppressed.

The above centrifugal separation method is not especially limited as long as it is a separation method by

centrifugal force, for example, a method for furnishing centrifugal force of not lower than 1000G, preferably not lower than 3000G and more preferably not lower than 5000G is used. Time for providing centrifugal force depends on centrifugal force and, for example, it is 1 minute to 3 hours, preferably 5 minutes to 2 hours and more preferably 10 minutes to 1.5 hours. Temperature of centrifugal separation is not especially limited as long as it is not higher than boiling point of a polyolefin reacting solution, and it is 0 to 70°C, preferably 5 to 60°C and more preferably 10 to 50°C.

The above decantation method is a method for standing still and separation of catalyst components precipitated in a polyolefin solution from a reaction solution, that is, a method for standing still until catalyst components completely precipitate and then flowing out and recovering only supernatant of a polyolefin solution. When colloid-like precipitate, and the like may be present in supernatant liquid side, it is preferable that precipitate is completely removed by further treatment of supernatant liquid by a filtration method, a centrifugal separation method, etc.

(iv) Removal of unreacted modifying agent and derivatives thereof

It is preferable that a modified polyolefin solution obtained by the above modification step (ii), is purified, as appropriate, because it may contain unreacted modifying agents or derivatives of a modifying agent. Derivatives of a modifying agent here mean mainly an oligomer or a polymer of a modifying agent.

Unreacted modifying agents or derivatives of a modifying agent are compounds more polar than a modified polyolefin produced by the present invention. Therefore, by using a more highly polar solvent, unreacted modifying agents and/or said derivatives can easily be extracted without deposition of a modified polyolefin.

A solvent used for extraction removal should be a compound with low solubility to a reaction solvent. An extraction solvent preferably has solubility to 100 g of a reaction solvent of not higher than 30 g at 20°C and more preferably not higher than 10 g. When a modified polyolefin produced by the present invention is easily soluble in an extraction solvent, a modified polyolefin itself is removed by extraction operation, therefore an extraction solution should be a compound which dissolves a modified polyolefin little.

An extraction solvent preferably dissolves a modified polyolefin not higher than 5 g at 20°C and more preferably not higher than 2 g based on 100 g of the extraction solvent. A suitable extraction solvent depends on kind of a reaction solvent but a typical example is N-methylpyrrolidone, water, etc.

In carrying out extraction operation, use of too much extraction solvent relative to a modified polyolefin solution may deposit a part of a modified polyolefin dissolved in a reacting solution after completion of modification reaction. In this case, amount of a modified polyolefin recovered as dissolved in a reaction solvent decreases. Further, thus deposited modified polyolefin is highly viscous starch syrup-like and adheres at extraction equipment wall surface, which significantly lowers operability and workability. Therefore, ratio of an extraction solvent to a reaction solvent after completion of modification reaction should be controlled not to be so large.

In carrying out extraction operation, to suppress generation of emulsion or foaming, small amount of a compound, such as 2-propanol may be added, to exert effect of emulsion braking.

Unreacted modifying agents and/or derivatives of a modifying agent left in a modified polyolefin solution can also be separated and removed by heating a solution under reduced pressure, and by evaporation or sublimation.

When a solid modifying agent such as maleic anhydride, maleic acid and fumaric acid is used as a modifying agent, unreacted solid modifying agents and/or derivatives of said modifying agent may deposit by only lowering temperature of a reacting solution, from reaction temperature to room temperature or lower, depending on composition of a reaction solution after modification reaction. In such a case, unreacted solid modifying agents and/or derivatives of said modifying agent thus deposited can be solid-liquid separated and removed by a decantation method, a filtration method, a centrifugal separation method, etc.

When a solid modifying agent such as maleic anhydride, maleic acid and fumaric acid is used as a modifying agent, unreacted solid modifying agents and/or derivatives of a modifying agent deposit by the addition of a solvent with far lower polarity than a reaction solvent to a reaction solvent after modification reaction. Therefore, they can also be solid-liquid separated by a decantation method, a filtration method, a centrifugal separation method, and the like without deposition of modified polyolefin, by using a solvent with lower polarity than a reaction solvent.

In this case, a low polar solvent is desirably a compound having larger polarity difference from a reaction solvent and easily dissolves modified polyolefin. When an aromatic solvent such as toluene and xylene is used as a reaction solvent, a typical example of said low polar solvent is an aliphatic hydrocarbon such as hexane, heptane, octane, decane, etc.

(v) Solution concentration adjustment step

This step is for adjustment of concentration of a polyolefin solution and/or a modified polyolefin solution by removing a solvent from a polyolefin solution and/or a modified polyolefin solution or by adding a solvent to make handling easy and it is preferable to be carried out as appropriate as shown by Fig. 1.

Concentration by removing a solvent from a polyolefin solution becomes necessary when a solution is taken out of a polymerization reactor, and catalyst components are insolubilized or further it is transferred to solid-liquid separation equipment. To concentrate by removing a solvent from a modified polyolefin solution becomes necessary also when a solution is taken out of a modification reactor to purify and is transferred to a storage tank as a product or transferred to another reactor for further modification reaction. Typically, a method for heating a solution under reduced pressure and evaporating a solvent is adopted. Such a method enables to reduce transfer amount and energy saving, along with enhance solution purity.

Dilution by adding a solvent to a polyolefin solution may be necessary when catalyst components are transferred from solid-liquid separating equipment to a reactor for modification. Dilution by adding a solvent to a modified polyolefin solution may also be necessary when a solution is taken out of a product storage tank to produce an emulsion composition or is fed to other reactor for further modification reaction. A solvent used for dilution is usually the same one as that used in polymerization or modification, however, different one may be added.

In any case of concentration and dilution, solution concentration is adjusted so that viscosity of a polymer solution is 2 to 2000 cP at 20°C, preferably 10 to 1500 cP and particularly preferably 30 to 1000 cP.

3. Typical examples of production methods for a modified polyolefin solution

Next, process to produce a modified polyolefin solution is explained typically in Fig. 2 and process to purify a modified polyolefin solution obtained in Fig. 3.

Fig. 2, (2-1) is a step flow example when unreacted modifying agents and/or derivatives of said modifying agent are not included in a reaction solution after completion of modification reaction, or even when a small amount of unreacted modifying agents and/or derivatives of said modifying agent are included in a reaction solution, they do not generate any problem and purification step is not required.

This process is the simplest composition consisting of a reaction tank (A) and solid-liquid separation equipment (B).

In the reaction tank (A), α-olefin is polymerized in the presence of a reaction solvent (low polar solvent) using homogeneous type metal complex catalyst and polymerization is terminated by the addition of a polymerization terminator. Next, unreacted α-olefins are removed by volatilization, followed by adjustment of temperature of a polyolefin solution to specific temperature and dilution by further adding a low polar solvent, if necessary.

Then a slurry solution, where all polymers are dissolved, is obtained by carrying out such operation as the addition of a compound with a hydroxyl group and alkaline components to insolubilize metal components and halogen components or by the addition of an adsorbent to adsorb catalyst metal components.

After that, whole slurry solution is transferred to solid-liquid separation equipment (B) mounting a filter and/or centrifugal separator for carrying out solid-liquid separation. Filtrate or supernatant liquid after centrifugal separation is returned to the reaction tank (A). Then a polymerization terminator or a compound with a hydroxyl group is removed by volatilization in the reaction tank (A) and polyolefin concentration in a solution is adjusted by volatilization of a low polar solvent, if necessary, and liquid temperature is adjusted to specified temperature.

Finally, a modifying agent and a radical reaction initiator are added and further a chain transfer modifier and/or an antioxidant are added, if necessary, to carry out modification reaction to obtain a modified polyolefin solution.

Fig. 2, (2-2) is a modified type of the above (2-1) and is a process consisting of a reaction tank (A1), solid-liquid separation equipment (B) and a reaction tank (A2).

In the reaction tank (A1), α-olefin is polymerized in the presence of a low polar solvent using homogeneous type metal complex catalyst. Polymerization is terminated by the addition of a polymerization terminator and unreacted α-olefins are removed by volatilization, followed by adjustment of liquid temperature to specific temperature and dilution by adding a low polar solvent, if necessary.

Then, a slurry solution, where all polymers are dissolved, is obtained by carrying out such operation as the addition of a compound with a hydroxyl group and alkaline components to insolubilize catalyst metal components and halogen components, or by the addition of an adsorbent to adsorb metal components.

After that, a slurry solution is transferred to solid-liquid separation equipment (B) mounting a filter and/or a centrifugal separator for carrying out solid-liquid separation. Filtrate or supernatant liquid after centrifugal separation is sequentially returned to the reaction tank (A2). Then a polymerization terminator or a compound with a hydroxyl group is removed by volatilization in the reaction tank (A2).

Finally, polyolefin concentration in a solution is adjusted by volatilization of a low polar solvent, if necessary, and liquid temperature is adjusted to specified temperature. A modifying agent and a radical reaction initiator are added and further a chain transfer modifier and/or an antioxidant are added, if necessary, to carry out modification reaction to obtain a modified polyolefin solution.

Fig. 2, (2-3) is also a modified type of the above (2-1) and shows a process consisting of a reaction tank (A1), a deposition tank of catalyst components (G), solid-liquid separation equipment (B) and a reaction tank (A2).

In the reaction tank (A1), α-olefin is polymerized in the presence of a low polar solvent using homogeneous type metal complex catalyst and polymerization is terminated by the addition of a polymerization terminator.

Then a reaction solution is transferred to the deposition tank of catalyst components (G) and unreacted α-olefins are removed by volatilization, followed by dilution by adding a low polar solvent, if necessary, and adjustment of liquid temperature to specific temperature. Then a slurry solution, where all polymers are dissolved, is obtained by carrying out such operation as the addition of a compound with a hydroxyl group and alkaline components to insolubilize catalyst metal components and halogen components, or by the addition of an adsorbent to adsorb metal components. After that, a slurry solution is transferred to solid-liquid separation equipment (B) mounting a filter and/or a centrifugal separator for carrying out solid-liquid separation.

Filtrate or supernatant liquid obtained after centrifugal separation is transferred to the reaction tank (A2). Then a polymerization terminator or a compound with a hydroxyl group is removed by volatilization in the reaction tank (A2), if necessary, and a low polar solvent is removed by volatilization, if necessary, to adjust concentration of polyolefin in a solution.

Finally, liquid temperature is adjusted to specified temperature and a modifying agent and a radical reaction initiator are added and further a chain transfer modifier and/or an antioxidant are added, if necessary, to carry out modification reaction to obtain a modified polyolefin solution.

In a production method for a polyolefin solution of the present invention, a step to remove at least a part of unreacted modifying agents and/or derivatives of said modifying agent which may present in a reacting solution after modification reaction, can be included after carrying out the above process.

Figs. 3, (3-1) to (3-3) show simplified flow examples of purification step of this reaction solution. This purification step is based on using, as starting material, an unpurified modified polyolefin solution produced by a step shown by Fig. 2.

Fig. 3, (3-1) shows a process consisting of a cooling tank (F) and a solid-liquid separation equipment (B) and is preferably applied when a solid modifying agent such as maleic anhydride, maleic acid and fumaric acid is used as a modifying agent.

In this process, a purified modified polyolefin solution is obtained by transferring an unpurified solution of modified polyolefin into the cooling tank (F) while stirring and cooling, followed by depositing solid-like modifying agents and/or derivatives thereof and solid-liquid separation of thus obtained solid-liquid mixture solution using solid-liquid separation equipment (B) such as a filter and/or a centrifugal separator.

Fig. 3, (3-2) shows a process consisting of a deposition tank (H), solid-liquid separation equipment (B) and a condensing tank or a distillation column (E).

Similarly as in the above, when a solid modifying agent such as maleic anhydride, maleic acid and fumaric acid is used as a modifying agent, solid-like modifying agents and/or derivatives thereof are deposited by transferring an unpurified solution of a modified polyolefin into the deposition tank (H), followed by removing a solvent used in reaction, if necessary, condensing a solution, adding while stirring a deposition solvent, which has lower polarity than said reaction solvent and easily dissolves a modified polyolefin but little dissolves the solid-like modifying agent, and cooling, if necessary.

Then thus obtained solid-liquid mixture liquid is subjected to solid-liquid separation using solid-liquid separation equipment (B) such as a filter and/or a centrifugal separator. A purified modified polyolefin solution is obtained by transferring filtrate or supernatant liquid after centrifugal separation, thus obtained, to the condensing tank or the distillation column (E) and concentration till content of a modified polyolefin reaches to specified value.

Fig. 3, (3-3) also shows a process consisting of an extraction tank (H'), a separation tank (B) and a condensing tank or a distillation column (E).

An unpurified solution of a modified polyolefin is transferred to the extraction tank (H') after removal of a solvent used in reaction, if necessary, followed by condensing or diluting with a reaction solvent, adding an extraction solvent and stirring. This solution is transferred to the separation tank (B) and stood still to be separated to reaction solvent phase containing a modified polyolefin and extracted solvent phase containing modifying agents and/or derivatives thereof.

Then, the reaction solvent phase is transferred to the condensing tank or the distillation column (E), where an extracting solvent is separated and removed by distillation and a purified modified polyolefin solution is obtained by condensing and removing a reaction solvent via distillation/separation, if necessary, or by diluting with a reaction solvent to adjust concentration of a modified polyolefin.

4. Other production examples of a modified polyolefin solution

A method for production of a modified polyolefin solution in the present invention also includes a method for reaction of polyolefin obtained in polymerization step (i) with a terminal modifying agent under specific catalyst and condition.

In this polymerization step (i) of α-olefin, living polymerization progresses by carrying out reaction under the above described condition using the above catalyst [1], that is, specific catalyst consisting of vanadium complex and an organoaluminum compound. By the addition of a terminal modifying agent, a polyolefin bonded with the modifying agent at polymer ends is obtained. As this terminal modifying agent, the same compound as is described above by the general formulae (A), (B) and (E), along with a compound with an active hydrogen represented by the following general formulae (C) and (D) can be used.

$$H_2C=C(R^1)COY \qquad (C)$$

(In the formula(C), $R^1$ represents H or a $C_{1-10}$ alkyl group; and Y represents H or an active hydrogen containing substituent.)

$$H_2C=C(R^1)R^2\text{-}Z \qquad (D)$$

(In the formula (D), $R^1$ represents H or a $C_{1-10}$ alkyl group; $R^2$ represents an aromatic group which may have a alkyl group; and Z represents an active hydrogen containing substituent.)

A compound represented by the general formulae (C) includes, for example, acrylic acid, acrylamide, N-methyl acrylamide, N-isopropyl acrylamide, 2-hydroxyethyl acrylate, 3-hydroxypropyl acrylate, 4-hydroxybutyl acrylate, 2-aminoethyl acrylate, 3-(acryloyloxy)propanesulfonic acid, methacrylic acid, methacrylamide, N-methyl methacrylamide, 2-hydroxyethyl methacrylate, 3-hydroxypropyl methacrylate, 4-hydroxybutyl methacrylate, 2-aminoethyl methacrylate, acrolein and itaconic acid.

In addition to the above, 2-(2-acryloyloxyethoxy)ethanol, 2-(2-(2-(2-acryloyloxyethoxy)ethoxy)ethoxy)ethyl-1-amine, 2-(2-(2-acryloyloxyethoxy)ethoxy)propane-1-thiol, 2-(2-(2-acryloyloxyethoxy)ethoxy)propane-1-sulfonic acid, 4-(2-(2-(2-acryloyloxyethoxy)ethoxy)ethoxy)butane-1-phosphate ester, 4-(2-(2-(4-isopropenylphenyl)ethoxy)ethoxy)butane-1-thiol, etc. are also exemplified.

A compound represented by the general equation (D) includes for example, 4-vinylbenzoic acid, 4-hydroxystyrene, 4-aminostyrene, p-styrenesulfonic acid, 4-vinylphenyl mercaptan, 4-isopropenylphenol, 3-(2-(4-vinylphenyl)ethoxy)propanol, 3-(2-(2-(2-(4-vinylphenyl)ethoxy)ethoxy)ethoxy)propane-1-amine, 3-(2-(2-(4-vinylphenyl)ethoxy)ethoxy)propane-1-thiol, 3-(2-(2-(4-vinylphenyl)ethoxy)ethoxy)propane-1-sulfonic acid and 3-(2-(2-(4-isopropenylphenyl)ethoxy)ethoxy)propane-1-thiol.

It is preferable that a compound having active hydrogen among the above terminal modifying agents, is complexed in advance with a complexing agent such as an organoaluminum compound.

Organic aluminium compounds, typically represent trimethylaluminium, triethylaluminium, tripropylaluminium, triisopropylaluminium, tributylaluminium, triisobutylaluminium, dimethylaluminium chloride, diethylaluminium chloride, diisobutylaluminium chloride, bis(2,6-di-tBu-phenoxy)methylaluminium, etc.

In addition to the above, a complexing agent such as diethylzinc, trimethylsilyl chloride, tBu-dimethylsilyl chloride, triisopropylsilyl chloride, methyllithium, butyllithium, sodium hydride, potassium hydride, methylmagnesium chloride, methylmagnesium bromide, butylmagnesium chloride, butylmagnesium bromide, etc. can be used.

Molar ratio of a complexing agent to a terminal modifying agent having active hydrogen is determined by number of hydrogen held by a terminal modifying agent. Number of active hydrogen held is 1, when a substitution group is, for example, OH, COOH and $NH(CH_3)$, and 2 for $NH_2$ or $PO_3H_2$. Molar ratio of a complexing agent to a terminal modifying agent is not less than 0.3 times said active hydrogen number, preferably 1.01 to 10 times and further preferably 1.1 to 3 times.

Complexing reaction preferably uses an inert and liquid solvent as a reaction solvent, including saturated aliphatic hydrocarbons such as propane, butane, pentane, hexane and heptane; saturated alicyclic hydrocarbons such as cyclopropane and cyclohexane; aromatic hydrocarbons such as benzene, toluene and xylene; etc.

Complexing reaction can be carried out at -100 to 100°C for 0.5 to 50 hours, preferably at -90 to 50°C for 1 to 30 hours and further preferably at -80 to 30°C for 1 to 15 hours.

Terminal modifying agents introduced at terminals are 0.5 to 50, preferably 1 to 30 units per 1 polymer molecular chain.

Now, a typical example of a method for modification after terminal modification of polyolefin is explained by Fig. 2. In process shown by Fig. (2-1), α-olefin is polymerized in the presence of a low polar solvent, using the above specified homogeneous metal complex catalyst [1] in the reaction tank (A), followed by the addition of a terminal modifying agent to carry out terminal modification reaction.

Then, polymerization is terminated by the addition of a polymerization terminator, followed by removal of

unreacted α-olefins by volatilization, dilution by the addition of a low polar solvent, if necessary, adjustment of liquid temperature to specified temperature and operation of insolubilization of metal components and halogen components or adsorption of metal components by the addition of an adsorbent to obtain a solution of terminal modified polyolefin.

After that, the whole solution is transferred to solid-liquid separation equipment (B) consisting of a filter and/or a centrifugal separator for carrying out solid-liquid separation.

Thus obtained filtrate or supernatant liquid after centrifugal separation is returned to the reaction tank (A). Then a polymerization terminator or a compound with a hydroxyl group is removed by volatilization in the reaction tank (A), if necessary, and a low polar solvent is removed by volatilization, if necessary, to adjust concentration of a terminal modified polyolefin in a solution and obtain a solution of a terminal modified polyolefin.

Other example is explained using Fig.2, (2-3), where α-olefin is polymerized in the presence of a low polar solvent, using the above specified homogeneous metal complex catalyst [1] in the reaction tank (A1), followed by the addition of a terminal modifying agent to carry out terminal modifying reaction and termination of polymerization by the addition of a polymerization terminator.

Then, the solution is transferred to the catalyst components deposition tank (G), followed by removal of unreacted α-olefins by volatilization, dilution by the addition of said a low polar solvent, if necessary, adjustment of liquid temperature to specified temperature and operation of insolubilization of metal components and halogen components by the addition of a compound with a hydroxyl group and alkaline components, or adsorption of metal components by the addition of an adsorbent to obtain a solution of a terminal modified polyolefin. After that, a solution obtained is transferred to solid-liquid separation equipment (B) consisting of a filter and/or a centrifugal separator for carrying out solid-liquid separation.

Thus obtained filtrate or supernatant liquid after centrifugal separation is returned to the condensation tank or the distillation column (E). Then a polymerization terminator or a compound with a hydroxyl group is removed by volatilization in the reaction tank (A2), if necessary, and a low polar solvent is removed by volatilization, if necessary, to adjust concentration of a terminal modified polyolefin and subjecting a solution of terminal modified polyolefin to a modification step.

Fig. 2, (2-4) shows a process consisting of a reaction tank (A1), a reaction tank (A2), a deposition tank of catalyst components (G), solid-liquid separation equipment (B) and a condensation tank (E).

In the reaction tank (A1), α-olefin is polymerized in the presence of a low polar solvent, using the above homogeneous type metal complex catalyst [1], followed by terminal modification reaction by a terminal modifying agent. After termination of polymerization, a reaction solution is transferred to the reaction tank (A2), followed by modification reaction of a terminal modified polyolefin by the addition of a modifying agent.

Then the reaction solution is transferred to the deposition tank of catalyst components (G), followed by dilution by adding a low polar solvent, if necessary, and adjustment to specific temperature and operation of insolubilization of metal components and halogen components by the addition of a compound with a hydroxyl group and alkaline components, or adsorption of metal components by the addition of an adsorbent to obtain a modified polyolefin solution.

After that, the solution obtained is transferred to solid-liquid separation equipment (B) consisting of a filter and/or a centrifugal separator for carrying out solid-liquid separation. Thus obtained filtrate or supernatant liquid after centrifugal separation is returned to the condensation tank or the distillation column (E).

Then a polymerization terminator or a compound with a hydroxyl group is removed by volatilization in the condensation tank or the distillation column (E), if necessary, and said low polar solvent is removed by volatilization, if necessary, to adjust concentration of a modified polyolefin to obtain a modified polyolefin solution.

As explained above, the present invention also includes subjecting to modification step (ii) by reading a terminal modified polyolefin as a polyolefin obtained by polymerization step (i).

Terminal modification reaction can be carried out by transferring to a reactor different from an olefin polymerization reactor, however, it is preferably carried out using the same reactor as in polymerization.

5. An aqueous modified polyolefin solution

A modified polyolefin solution produced by the present invention can be made aqueous by the addition of a basic substance and a surfactant thereto, followed by further addition of water, emulsification treatment, if necessary; and replacing a solvent with water, without deposition of modified polyolefin.

6. Solidification of a modified polyolefin solution

A modified polyolefin solution obtained by the present invention can be made solidified form of a modified polyolefin. That is, a modified polyolefin can be isolated and recovered as solid by a method for separation of a solvent and polymer by heating a polymer solution, a method for spraying in hot air, a method for using a stretched thin film evaporator, a method for drum drying, a method for using a vented extruder dryer, a method for coagulative precipitation

of polymer by the addition of a large quantity of a poor solvent to a polymer solution, etc.

Examples

Next, the present invention is explained in more detail using Examples, but the present invention should not in the least be limited by these Examples.

Analysis methods

1. Measurement of molecular weight

Molecular weight of polymer was measured using GPC (Gel Permeation Chromatography) Model 150 made by Waters Co., Ltd. It was measured using o-dichlorobenzene as a solvent and under conditions of measured temperature of 135 °C, and solvent flow rate of 1.0 ml/min. TSK-GEL $GMH_{XL}$-HT manufactured by Tosoh Corporation was used as a column, a calibration curve for polystyrene was determined using a standard sample of monodispersed polystyrene, and thereby molecular weight of a polyolefin was determined based on a universal method.

2. Determination of polymer structure

Polymer structure was determined using a Fourier Transform NMR spectrometer, GS400, manufactured by JEOL Ltd., and $^1$H-NMR spectrum was obtained under conditions of 400MHz, 30 °C and pulse interval of 15 sec. A sample was prepared by dissolving polymer into deuterated chloroform. A $^{13}$C-NMR spectrum was measured using XL-200 model, manufactured by Varian Co., Ltd., under conditions of 50MHz, 120 °C and pulse width of 8.2 μS, π/3, pulse interval of 4 sec, and an integration times of 5000. A sample was prepared by dissolving polymer into a mixed solvent of trichlorobenzene and benzene (2:1).

3. Measurement of value of heat of crystal fusion

Value of heat of crystal fusion was shown as value calculated from a specific heat curve of a completely molten state of polymer by a differential scanning calorimeter and by using a straight line obtained by directly extrapolation to lower temperature side thereof, as a base line. The measurement was conducted using "system 7" manufactured by Perkin-Elmer Co., Ltd., as a differential scanning calorimeter, and using about 10 mg sample, under nitrogen atmosphere. Calibration of temperature and calorie value was conducted using indium.

A heating program is as follows: Temperature of a sample was raised to 230°C at 10°C/min rate, followed by standing for 5 minutes at 230°C, cooling to -50°C at 10°C/min rate, standing for 5 minutes at -50°C and raising from -50°C to 230°C at 10°C/min rate.

Value of heat of crystal fusion was determined by setting a straight base line in the range of 80 to 175°C, calculating a total value of heat from area of a part encircled with a melting curve and the base line, and dividing the value with sample weight.

4. Measurement of the amount of insoluble matter in boiling n-heptane

Insoluble matter in boiling n-heptane was measured by putting a finely pulverized sample of about 3g into a cylindrical filter paper, followed by extraction using a Soxhlet extractor for 5 hours in 180 ml of n-heptane, drying the residue after the extraction with a vacuum dryer to constant weight, and determining weight thereof.

5. Measurement of the introduced amount of modifying agents into a polyolefin (number of modifying agents /one molecule of a polyolefin)

The introduced amount of functional groups was measured by analysis of an absorption peak in an infrared absorption spectrum (IR) of a polymer film formed. For the IR measurement, FT/IR-470 manufactured by JEOL Ltd. was used.

Example 1

Polymerization of propylene

To a 2 L autoclave equipped with a stirrer, after sufficient purging with nitrogen, 180 mL of toluene was charged

and held at -60°C. 2.5 ML of 2 mol/L $Al(C_2H_5)_{1.5}Cl_{1.5}$ was added thereto at the same temperature. Then 8.3 mol of propylene was introduced while stirring. Further, 2 mL of a 0.1 mol/L $VOCl_3$ toluene solution was added and subjected to reaction for 9 hours. After that, polymerization was terminated by the addition of a small amount of methanol to deactivate catalyst.

At this time, about 10 mL of a reaction solution was preparatively isolated for analysis and poured into 1L of methanol while stirring to deposit solid polymer, which was washed 5 times with methanol and dried at room temperature under reduced pressure. GPC measurement results of this polymer showed that it has a GPC curve with a single peak, weight average molecular weight (Mw) of 38,000, molecular weight distribution (Mw/Mn) of 2.1. Racemic diad fraction [r] of propylene sequence measured by $^{13}$C-NMR was 0.84. Heat of crystal fusion was 0 J/g and insoluble matter in boiling n-heptane by Soxhlet extraction was 0%.

Modification by hydroxyethyl acrylate

After heating the polymer solution obtained above to 95°C, 64 g of hydroxyethyl acrylate and 16g of t-butylperoxy-2-ethylhexanoate were added and stirred for 4 hours. Then, by cooling to room temperature, a solution of polymer modified with hydroxyethyl acrylate was obtained.

A part of the polymer solution obtained was preparatively isolated and completely solidified by pouring into a large quantity of methanol after gradual cooling, followed by washing 5 times with methanol and drying at room temperature under reduced pressure. Thus obtained polymer was subjected to IR measurement to observe an absorption peak derived from an ester at the vicinity of 1730 $cm^{-1}$. From absorption intensity thereof, the introduction amount of modifying agents to polypropylene was determined and was found to be 30 units/chain.

Example 2

Polymerization of propylene

To a 2 L stainless steel autoclave equipped with a stirrer, after sufficient purging with nitrogen, 250 ml of toluene, 40 ml of a toluene solution containing 1mmol/l of dioctylaluminium chloride and 4 ml of a toluene solution containing 1mmol/l trispentafluorophenylborane were charged and 8.3 mol of propylene was introduced, followed by adjustment of pressure by nitrogen to 500 kPaG and heating to 60°C while stirring and 1 mL toluene solution of 1 mmol/L of isopropylidene(cyclopentadienylfluorenyl)dimethylzirconium ($Me_2C(Cp, Flu)ZrMe_2$) was added to start polymerization. After polymerization for 2 hours, ethanol was gradually added while stirring to deactivate catalyst. Then, pressure was gradually lowered to normal pressure and by further heating to 100°C, unreacted propylene, ethanol and volatile components derived from catalyst were removed.

A part of a slurry-like reacting solution thus obtained was treated similarly as in Example 1 to obtain solid polymer which was subjected to GPC analysis. The results showed that it has weight average molecular weight (Mw) of 90,000, molecular weight distribution (Mw/Mn) of 2.1. Racemic diad fraction [r] of propylene sequence measured by $^{13}$C-NMR was 0.94. Heat of crystal fusion was not higher than 20 J/g.

Modification by maleic anhydride

The slurry like reacting liquid obtained above was pressurized with nitrogen and kept at 800 kPaG and heated up to 170°C while stirring. After the system reached to 170°C, a toluene (10 ml) solution dissolved with 0.5 g of maleic anhydride and a toluene (1 ml) solution dissolved with 2,5-dimethyl-2,5-di-t-butylperoxyhexane (0.025 g) were added 5 times every 30 minutes. After completion of the final addition, stirring was continued for further 2 hours at 170°C and the solution was cooled to room temperature while stirring. By filtering the slurry like reacting liquid obtained, solid polymer (4.5 g) was obtained. Thus obtained polymer was subjected to IR measurement to observe absorption peaks derived from a dicarboxylic anhydride at the vicinity of 1780 $cm^{-1}$ and 1860 $cm^{-1}$. From absorption intensity thereof, the introduction amount of modifying agents to polypropylene was determined and was found to be 1.6 units/chain.

Example 3

Polymerization of propylene

To a 50 L autoclave equipped with a stirrer, after sufficient purging with nitrogen, 25 L of toluene was charged and kept at 21°C. A 750 mL toluene solution of 2 mol/L ethylaluminium sesquichloride was added at the same temperature and then a 125 mL toluene solution of 1 mol/L tetrabutoxytitanium was added and propylene was introduced while stirring. Pressure of propylene was always kept to 3 atmosphere during polymerization. Introduction of propylene

was looked as start of polymerization. Polymerization was carried out for 8 hours. After that, 0.2 L of methanol was added to terminate polymerization. Then, unreacted propylene was vaporized to obtain 25 kg of a reacting solution.

A part of the polymer solution thus obtained was preparatively isolated to be subjected to composition analysis. The results showed that the reacting solution has PP content of 3.4% by weight, titanium content of 240 ppm by weight and aluminum content of 3275 ppm by weight.

Removal of catalyst components

To the above reaction solution of 16.5 kg, 535 ml of a 0.5% aqueous solution of SANFLOCK N-500 from Sanyo Chemical Industries, Ltd. as polymer coagulant and 41 mL of Pluronic® from Adeka Co., Ltd., as a surfactant, were added and stirred fiercely for 30 minutes. After stirring, this solution was subjected to centrifugal separation under 5000 G at room temperature for 1 hour. After centrifugal separation, a colorless transparent upper layer and precipitated polymer coagulant was obtained separately and 15.7 kg of a purified polymer solution was obtained as colorless transparent supernatant liquid.

This supernatant liquid was subjected to X-ray fluorescence analysis to quantitatively determine titanium and aluminum contents and were found to be 4 ppm by weight and 7 ppm by weight, respectively. Solid polymer obtained by similar treatment of this supernatant liquid as in Example 1 was subjected to GPC analysis and found that it has a GPC curve with a single peak, weight average molecular weight (Mw) of 25,000, molecular weight distribution (Mw/Mn) of 1.9. Racemic diad fraction [r] of propylene sequence measured by $^{13}$C-NMR was 0.32. Insoluble matter in boiling n-heptane by Soxhlet extraction was not higher than 50% by weight.

Modification by methyl methacrylate

The purified polymer solution of 15.0 kg obtained above was charged into a 30 L autoclave equipped with a stirrer, after sufficient purging with nitrogen, followed by heating to 60°C, adding 280 g of methyl methacrylate and 14 g of t-butylperoxy-2-ethylhexanoate, and stirring for 3 hours. Then by cooling to room temperature, a solution of polymer modified with methyl methacrylate was obtained.

A part of the polymer solution thus obtained was preparatively isolated, followed by complete solidification by charging into a large quantity of methanol after gradual cooling, washing 5 times with methanol, drying at room temperature under reduced pressure and subjecting to IR analysis of thus obtained polymer to observe an absorption peak derived from an ester at the vicinity of 1730 $cm^{-1}$. From absorption intensity thereof, the introduction amount of modifying agents to polypropylene was determined and was found to be 7 units/chain.

Example 4

Polymerization of propylene and dilution of a reaction solution

To a 400 L SUS reaction kettle equipped with a jacket cooler and a stirrer, after sufficient purging with nitrogen, 90 L of toluene and a toluene solution of 12 mol $Al(C_2H_5)_{1.5}Cl_{1.5}$ were charged and cooled at -60°C. Then propylene (210 L) was added and liquified and dissolved in toluene. When internal temperature was stabilized at -60°C, a toluene solution of 0.14 mole vanadiumtris(acetonato) was added to start polymerization. After start of polymerization, a toluene solution of 0.14 mole vanadiumtris(acetonato) was added every 30 minutes so that a toluene solution of 0.56 mole vanadiumtris(acetonato) was added in total and subjected to reaction at -60°C for 2 hours.

After that, 10 L of methanol diluted 4 times with toluene was added to terminate polymerization. Then the system was gradually heated to purge unreacted propylene, followed by dilution by the addition of 50 L of toluene and taking out a polymer solution.

Removal of catalyst components

To a 500 L SUS reaction kettle equipped with a jacket heater and a stirrer, 140 kg of the polymer solution thus obtained above and toluene (60 kg) were charged and heated to 50°C while stirring and a mixture liquid of 5.8 kg of a 28% by weight methanol solution of sodium methoxide and 8.5 kg of methanol was added thereto. Viscosity at 50°C of said solution was 60 cP. After stirring at 50°C for 1 hour, the solution was heated to 60°C and added with 13.5 kg of Radiolight #700 from Showa Chemical Industry Co., Ltd. and stirred to obtain homogeneous slurry.

To a horizontal filer plate type pressure filter equipped with a jacket heater, filter cloth, whose retaining particle diameter is 1μm, was set and a 3 mm thick precoating layer of Radiolight #700 was formed and, after heating to 60°C, this slurry liquid was charged thereto. After sealing the filter, inside the filter was pressurized to 50 kPaG to start filtration. After filtration start, initial filtrate was white turbid, however, it turned colorless and transparent later, therefore by recharging white turbid liquid into the filter, colorless and transparent filtrate was recovered as a purified product. By continuing filtration with gradual increase in pressure inside the filter up to 200 kPaG, filtration of whole polymer solution charged in the filter was completed in about 3 hours. Then, toluene (20 kg) was charged in the filter, followed by washing out a polymer solution included in residue captured on filter cloth to obtain a purified polymer solution of 210 kg in total as filtrate.

A part of this purified polymer solution was preparatively isolated and analyzed and polymer content was found to be 7.5% by weight and contents of aluminum, vanadium and chlorine were each less than 10 ppm. A GPC curve had a single peak and weight average molecular weight (Mw) was 130,000 and molecular weight distribution (Mw/Mn) was 1.8. Racemic diad fraction [r] of propylene sequence measured by $^{13}$C-NMR was 0.80. Heat of crystal fusion was not higher than 20 J/g.

Concentration and modification by acrylic acid

To a 500 L SUS reaction kettle equipped with a jacket heater and a stirrer, 200 kg of the polymer solution thus obtained above was charged, followed by pressurization with nitrogen up to 30 kPaG and gradual heating while stirring to remove methanol and a part of toluene. When removed and recovered liquid amount reached to 97 kg, removal was stopped and liquid was cooled to 110°C.

After liquid temperature reached to 110°C, 15 g of acrylic acid and a 10 ml toluene solution of 90 g/l t-butylperoxy-2-ethylhexanoate was added 10 times portion wise in total every 20 minutes while stirring the polymer solution. Then, after continuing stirring for 2 hours, the solution was cooled to room temperature to obtain 100 kg of a polymer solution modified with acrylic acid. Polymer content was 15% by weight and viscosity of the solution was 850 cP.

A part of the polymer solution thus obtained was preparatively isolated and poured in a large quantity of methanol after cooling to completely solidify a polymer, which was washed 5 times with methanol, followed by drying at room temperature under reduced pressure to be subjected to IR analysis to observe an absorption peak derived from a carboxylic acid at the vicinity of 1720 $cm^{-1}$. From absorption intensity thereof, the introduction amount of modifying agents to polypropylene was determined and was found to be 9 units/chain.

Example 5

Concentration and modification by fumaric acid

By carrying out operation (polymerization of propylene, dilution and removal of catalyst components) twice similarly as in Example 4, 420 kg of a purified polymer solution containing 7.5% by weight of polymer was obtained. To a 500 L SUS reaction kettle equipped with a jacket heater and a stirrer, 300 kg of this polymer solution was charged and pressurized with nitrogen to 30 kPaG, followed by gradually heating while stirring and removing methanol and a part of toluene. When the removed and recovered liquid amount reached to 197 kg, removal was stopped and liquid was cooled to 100°C. After stirring was stopped, pressure was returned to normal pressure and 16 kg of fumaric acid was charged, followed by adjusting pressure to 600 kPaG by introduction of nitrogen and heating up to 150°C while stirring. When temperature was stabilized at 150°C, 1 L of a toluene solution of 90 g/l t-butylperoxy -2-ethylhexanoate was added 5 times portion wise in total every 30 minutes and after completing the final addition stirring was continued for further 3 hours at 150°C.

Purification of a reaction solution

After the end of the above operation, the reaction solution was cooled to 10°C while stirring at low speed. When liquid temperature reached to 10°C, and after pressure was adjusted to 30 kPaG, stirring was continued further 2 hours at low speed. By the operation, nearly all of unreacted fumaric acid and a part of derivatives (mainly oligomers) of fumaric acid were deposited as slurry state. Thus obtained slurry was added with 8 kg of Radiolight #700 from Showa Chemical Industry Co., Ltd. and stirred to obtain homogeneous slurry.

To a horizontal filer plate type pressure filter equipped with a jacket heater, filter cloth, whose retaining particle diameter is 1μm, was set and a 3 mm thick precoating layer of Radiolight #700 was formed and, after adjusting at 10°C, this slurry liquid was charged thereto. After sealing the filter, inside the filter was pressurized to 50 kPaG with nitrogen to start filtration. After filtration start, initial filtrate was white turbid, however, it turned colorless and transparent later, therefore by recharging white turbid liquid into the filter, colorless and transparent filtrate was recovered as a purified product. By continuing filtration with gradual increase in pressure inside the filter up to 400 kPaG, filtration of a whole polymer solution charged in the filter was completed in about 6 hours. A purified polymer solution of 96 kg was obtained as filtrate. Polymer content in this solution was 21% by weight.

A part of this polymer solution obtained was preparatively isolated and, after cooling, poured into a large

quantity of methanol to completely solidify, followed by washing 5 times with methanol, drying at room temperature under reduced pressure to be subjected to IR measurement of thus obtained polymer to observe an absorption peak derived from a carboxylic acid at the vicinity of 1715 $cm^{-1}$. From absorption intensity thereof, the introduction amount of modifying agents to polypropylene was determined and was found to be 2.2 units/chain.

Example 6

Complexation of a terminal modifying agent having active hydrogen by an organoaluminum compound

To a 20 L flask equipped with a stirrer, after sufficient purging with nitrogen, 7 L of toluene and 9 mol of Al $(i\text{-}C_4H_9)_2Cl$ were introduced and cooled to -78°C, followed by drop-wise addition of hydroxylethyl methacrylate (4.5 mol) over 2 hours while maintaining the reaction system at -78°C. After completion of the drop-wise addition, the reaction system was gradually heated to room temperature while stirring.

Polymerization of propylene

To a 200 L SUS reaction kettle equipped with a jacket cooler and a stirrer, after sufficient purging with nitrogen, toluene (45 L) and a toluene solution of 9 mol of $Al(i\text{-}C_4H_9)_2Cl$ were charged and cooled to -60°C while stirring. At the same temperature 105 L of propylene was added and liquified and dissolved in toluene. Then, a toluene solution of 0.9 mol of 1,3-dioxolan and a toluene solution of 0.75 mol of vanadiumtris(2-methyl-1,3-butanedionato) were added to start polymerization. After polymerization of propylene at -60°C for 1 hour, the following terminal modification was carried out.

Reaction of hydroxyethyl methacrylate with an organoaluminum complex

Terminal modification reaction was carried out by the addition of an organoaluminum complex of hydroxyethyl methacrylate prepared before to the above propylene polymerization system cooled at -60°C. After 8 hours of reaction, polymerization was terminated by the addition of 3L of methanol diluted 4 times with toluene, followed by gradual elevation of temperature to purge unreacted propylene. Because the reaction solution was concentrated with propylene purging, 25 L of toluene was added for dilution, followed by stirring for 1 hour and taking out 72 kg of a polymer solution.

A part of this polymer solution obtained was preparatively isolated and, after cooling, poured into a large quantity of methanol for complete solidification, followed by washing 5 times with methanol, drying at room temperature under reduced pressure to be subjected to IR analysis of thus obtained polymer to observe an absorption peak derived from a hydroxyl group at the vicinity of 1740 $cm^{-1}$. GPC measurement results showed that weight average molecular weight (Mw) was 17,000, molecular weight distribution (Mw/Mn) was 1.2. Insoluble matter by Soxhlet extraction using boiling n-heptane was not higher than 50% by weight. Racemic diad fraction [r] of propylene sequence measured by $^{13}C$-NMR was 0.83. Measurement with $^{1}H$-NMR showed peaks with the following chemical shift values other than a peak (δ=0.7 to 1.7 ppm) derived from propylene sequence.

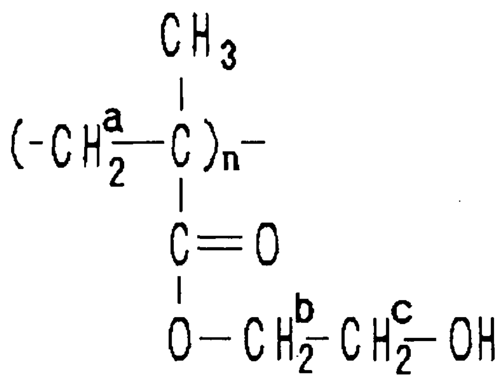

| assignment | chemical shift value (ppm: based on TMS) |
|---|---|
| a | 1.9 |
| b | 4.2 |
| c | 3.6 |

From calculation result using intensity ratio of a signal based on propylene sequence to the above a, along with number average molecular weight, it was confirmed that 1.1 units of the above was bonded at polypropylene terminal.

Removal of catalyst components

To 70 kg of the above reaction solution were added 2.3 L of a 0.5% aqueous solution of SANFLOCK N-500 from Sanyo Chemical Industries, Ltd. and 180 ml of Pluronic® from Adeka Co., Ltd., as a surfactant, followed by fierce stirring for 30 minutes. After stirring, this solution was subjected to centrifugal separation at room temperature to obtain 65 kg of a purified polymer solution as colorless transparent filtrate.

Modification by glycidyl methacrylate

To a 200 L SUS reaction kettle equipped with a jacket heater and a stirrer, 65 kg of the purified polymer solution obtained above and toluene (20 kg) were charged, followed by pressurization with nitrogen to 30 kPaF, gradually elevating temperature while stirring and removing residual water and a part of toluene. When the removed and recovered amount of liquid reached to 20 kg, removal was stopped and temperature was adjusted at 93°C.

After temperature of a polymer solution was stabilized at 93°C, 4 kg of glycidyl methacrylate and 3 g of t-butylperoxy-2-ethylhexanoate were added, followed by continued stirring for 2 hours and cooling to room temperature to obtain 69 kg of a solution of polymer modified with glycidyl methacrylate

A part of this polymer solution obtained was preparatively isolated and, after cooling, poured into a large quantity of methanol to completely solidify, followed by washing 5 times with methanol, drying at room temperature under reduced pressure and thus obtained polymer was subjected to IR measurement. It was observed that a peak derived from stretching vibration of a carbonyl group at 1740 $cm^{-1}$ was increased compared with that before reaction with glycidyl methacrylate.

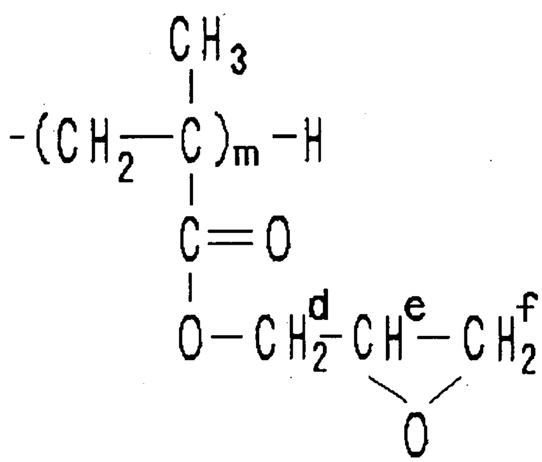

| assignment | chemical shift value (ppm: based on TMS) |
|---|---|
| d | 3.9, 4.3 |
| e | 3.2 |
| f | 2.6, 2.8 |

By measurement with $^1$H-NMR, new peaks (peaks d to f) assigned to glycidyl methacrylate were observed, along with a peak derived from propylene proton (δ=0.7 to 1.7 ppm) and the above hydroxyethyl methacrylate.

From these results of NMR and IR analyses, it was confirmed that glycidyl methacrylate was introduced to polypropylene chains. From calculation result using peak intensity ratio of polypropylene proton to the above e, along with number average molecular weight measured by GPC, it was confirmed that number of glycidyl methacrylate units was 4.

From the above results, in accordance with Examples 1 to 6, in a series of processes from propylene polymerization to modification by a modifying agent, polymer was not dried in any of the steps and thus a desired polymer solution was found to be obtained easily.

Industrial Applicability

According to the present invention, a modified polyolefin solution is produced without isolating and recovering polymer as a solid, and therefore polymer loss can be reduced, and since neither complete separation and removal of a solvent nor polymer dissolution is conducted, process can be simple and not expensive. Further, since a reaction solvent and a production solvent can be the same, not only solvent kinds used can be reduced but also advantage of decrease in facility cost, and the like are afforded, and thus the waste solution amount is reduced, which leads to reduced environmental load.

Furthermore, a modified polyolefin solution obtained, or a solidified polyolefin obtained by removing the solvent

therefrom can be used as coating material, a surface modifier, a primer, a coating agent, ink, adhesives, a compatibilizing agent, and intermediate raw material thereof, and therefore industrial value thereof is extremely great.

## Claims

1. A method for producing a modified polyolefin solution, **characterized by** comprising a step wherein an α-olefin is polymerized in the presence of polymerization catalyst in liquid phase to obtain a polyolefin as a polymer solution or slurry and a step wherein the polymer in solution or slurry state is modified, and in that the polymer is not dried.

2. The method for producing a modified polyolefin solution according to Claim 1, **characterized by** further comprising a step for removing catalyst components before or after the step wherein a polyolefin is modified.

3. The method for producing a modified polyolefin solution according to Claim 1 or 2, **characterized by** further comprising a step for removing unreacted modifying agents and derivatives of the modifying agent from a solution or slurry of the modified polyolefin obtained after modification step of a polyolefin.

4. The method for producing a modified polyolefin solution according to any one of Claims 1 to 3, **characterized by** further comprising a step for adjusting concentration of the solution or slurry after any of the steps.

Figure 1

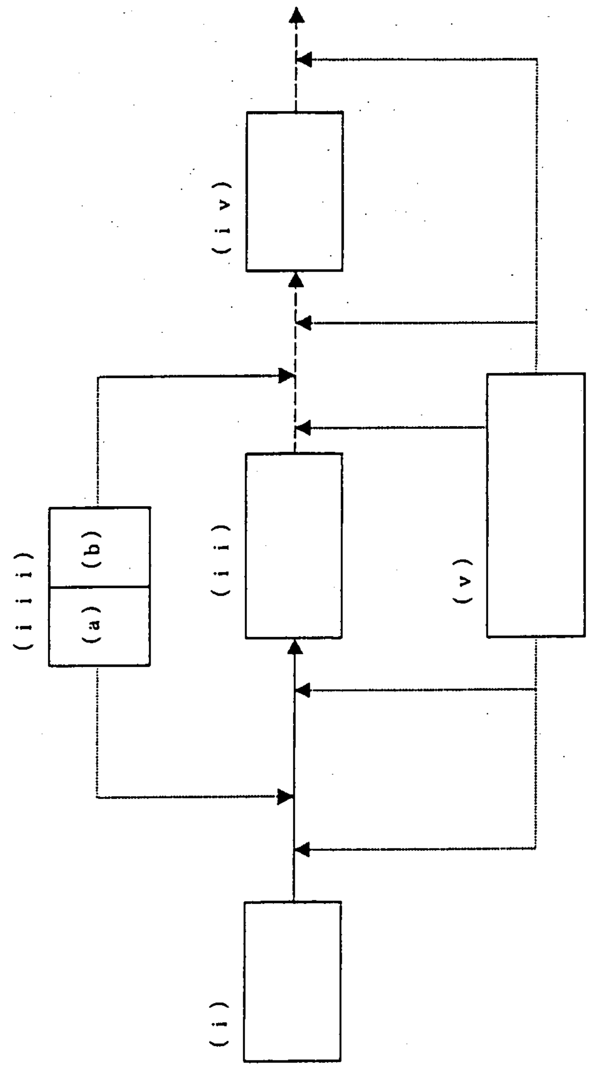

Figure 2

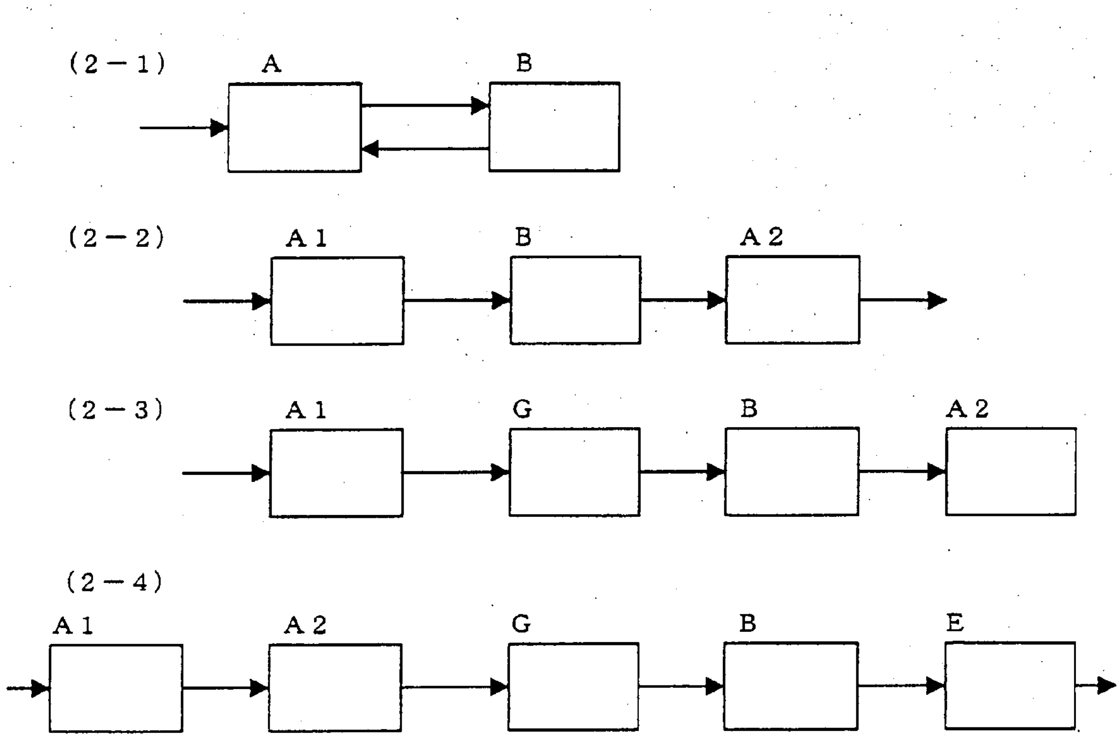

Figure 3

(3－1)

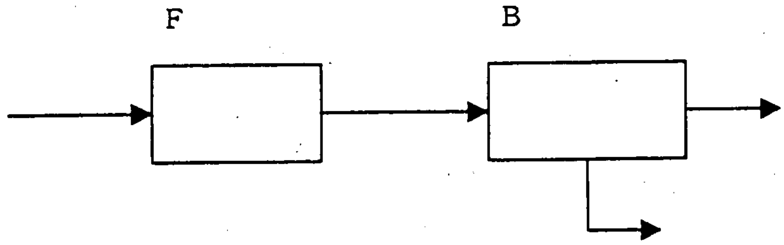


(3－2)

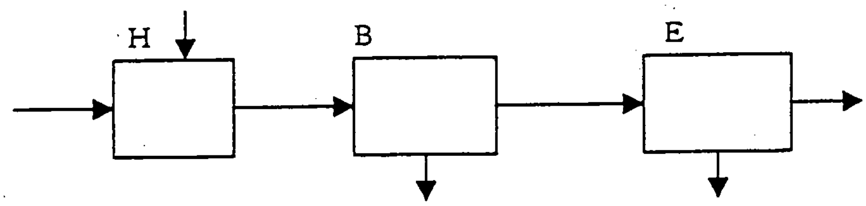


(3－3)

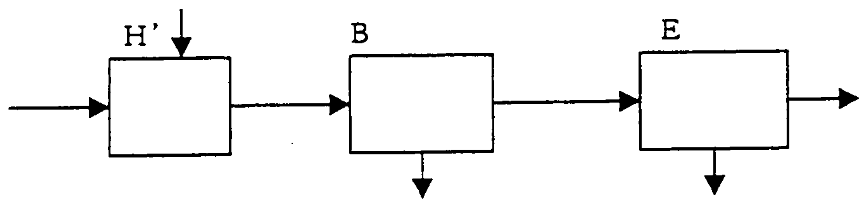

## INTERNATIONAL SEARCH REPORT

International application No.
PCT/JP2004/003222

A. CLASSIFICATION OF SUBJECT MATTER
Int.Cl$^7$ C08F8/00, C08F6/08, C08F255/00

According to International Patent Classification (IPC) or to both national classification and IPC

B. FIELDS SEARCHED

Minimum documentation searched (classification system followed by classification symbols)
Int.Cl$^7$ C08F8/00, C08F6/08, C08F255/00

Documentation searched other than minimum documentation to the extent that such documents are included in the fields searched

Electronic data base consulted during the international search (name of data base and, where practicable, search terms used)
WPI(L)

C. DOCUMENTS CONSIDERED TO BE RELEVANT

| Category* | Citation of document, with indication, where appropriate, of the relevant passages | Relevant to claim No. |
|---|---|---|
| X | JP 11-116614 A (Teijin Ltd.), 27 April, 1999 (27.04.99), Claims; Par. Nos. [0053], [0074] & EP 1028128 A1 & US 6388032 B1 & WO 99/20662 A1 | 1-4 |
| X | JP 8-193104 A (Lion Corp.), 30 July, 1996 (30.07.96), Claims; Par. No. [0009] & AU 3771195 A | 1,2,4 |
| X | JP 2000-63429 A (Lion Corp.), 29 February, 2000 (29.02.00), Claims (Family: none) | 1,2,4 |

[X] Further documents are listed in the continuation of Box C.

[ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 June, 2004 (08.06.04) | 29 June, 2004 (29.06.04) |
| Name and mailing address of the ISA/ Japanese Patent Office | Authorized officer |
| Facsimile No. | Telephone No. |

Form PCT/ISA/210 (second sheet) (January 2004)

INTERNATIONAL SEARCH REPORT

International application No. PCT/JP2004/003222

C (Continuation). DOCUMENTS CONSIDERED TO BE RELEVANT

| Category* | Citation of document, with indication, where appropriate, of the relevant passages | Relevant to claim No. |
|---|---|---|
| X | JP 51-103995 A (Exxon Research & Engineering Co.), 14 September, 1976 (14.09.76), Claims; page 15, upper left column to upper right column & DE 2510693 A & FR 2302309 A & GB 1472846 A | 1,4 |

Form PCT/ISA/210 (continuation of second sheet) (January 2004)